# EUROPEAN PATENT APPLICATION

(11) **EP 4 366 209 A1**
(43) Date of publication of application: **08.05.2024**
(21) Application number: 21947466.5
(22) Date of filing: 29.06.2021
(51) Int. Cl.: H04L 5/00

(54) **COMMUNICATION METHOD AND APPARATUS FOR PUCCH, AND STORAGE MEDIUM**

(71) Applicant: Beijing Xiaomi Mobile Software Co., Ltd., Beijing 100085 (CN)
(72) Inventor: LIU, Yang, Beijing 100085 (CN)
(74) Representative: Hughes, Andrea Michelle
(86) International application number: PCT/CN2021/103230
(87) International publication number: WO 2023/272509

(57) **Abstract**

The present disclosure relates to a communication method and apparatus for a PUCCH, and a storage medium. The communication method for a PUCCH, when applied to a network device, comprises: in response to determining that a terminal cooperatively sends a PUCCH towards multiple TRP directions, sending instruction information. The communication method for a PUCCH, when applied to a terminal, comprises: receiving instruction information, and, on the basis of the instruction information, cooperatively sending a PUCCH towards multiple TRP directions. The instruction information is used to instruct the terminal to dynamically switch repeated transmission schemes, so as to cooperatively and repeatedly send the PUCCH towards the multiple TRP directions. The repeated transmission schemes comprise an inter-slot repeated transmission scheme, an intra-slot repeated transmission scheme based on beam hopping, and an intra-slot repeated transmission scheme based on sub-slots. In the present disclosure, the dynamic switching of repeated transmission schemes can be achieved, and system scheduling flexibility and efficiency are increased.

## Description

### TECHNICAL FIELD

The disclosure relates to the field of communication technologies, and particularly to a communication method and a communication apparatus for a physical uplink control channel (PUCCH), and a storage medium.

### BACKGROUND

With the development of communication technologies, the technology of transmission and reception based on beams is increasing being used to ensure a coverage range. When a network device (for example, a base station) has multiple transmission reception points (TRPs), the multiple TRPs (multi-TRP)/multiple panels (multi-PANEL) may be used to provide services for terminals. The usage of the multi-TRP/PANEL in the network device may improve a cell edge coverage, provide a more balanced quality of service in a service area, and cooperatively transmit/receive data among the multi-TRP/PANEL in different ways. From a perspective of a network morphology, a network deployment is performed in a centralized processing manner that combines a large number of distributed access points with a baseband, which is more conductive to providing a balanced rate for user experience, and significantly reduces a latency and signaling overhead caused by handover. Channel transmission/reception is performed on multiple beams from multiple perspectives using cooperation among the multi-TRP/PANEL, which may overcome various shielding/blocking effects better, guarantee link connection robustness, and is suitable for ultra-reliable low-latency communication (URLLC) services to improve a transmission/reception quality and satisfy a reliability requirement.

In the release 16 (R16) research stage, a physical downlink shared channel (PDSCH) enhancement is performed based on a downlink multi-point cooperative transmission/reception technology among multi-TRP/PANEL. Since data transmission/reception includes scheduling and feedback of uplink and downlink channels, only the downlink data channel enhancement may not guarantee a service performance in the research of the URLLC. Therefore, in the release 17 (R17) research, a physical downlink control channel (PDCCH), a physical uplink control channel (PUCCH), and a physical uplink shared channel (PUSCH) continue to be enhanced.

An uplink enhancement scheme based on the multi-TRP is a PUCCH/PUSCH repetition scheme. In consideration of an uplink coverage problem in R15/16, a repetition mechanism on multiple slots is introduced into a long PUCCH (corresponding to PUCCH format 1/3/4). Different PUCCH resources are transmitted on different transmission opportunities (TOs) of each slot based on the same transmission symbol length. The uplink enhancement scheme based on the multi-TRP in R17 is based on a PUSCH repetition scheme in R16. In a multi-TRP enhancement in R17, the PUCCH supports cooperatively transmitting the same transport block (TB) on different TOs towards different TRP directions, to further improve the transmission/reception reliability by using spatial multiplexing transmission/reception.

There may be an inter-slot repetition scheme (i.e., scheme 1) and an intra-slot repetition scheme for a PUCCH channel transmission/reception. The intra-slot repetition scheme includes an intra-slot repetition scheme (i.e., scheme 2) based on frequency hopping and an intra-slot repetition scheme (i.e., scheme 3) based on sub-slot. However, in the PUCCH enhancement based on the multi-TRP in R17, an intra-slot (including scheme 2&scheme 3) repetition scheme and an inter-slot (scheme 1) repetition scheme included in the repetition enhancement scheme for different TRPs may not satisfy various scenario requirements under the multi-TRP transmission/reception. Therefore, it is necessary to provide a possible enhancement scheme to improve the transmission/reception reliability.

### SUMMARY

A communication method and a communication apparatus for a physical uplink control channel (PUCCH), and a storage medium are provided in embodiments of the disclosure to overcome problems existing in the related art.

According to a first aspect of embodiments of the disclosure, a communication method for a physical uplink control channel (PUCCH) is provided and performed by a network device. The communication method for the PUCCH includes: in response to determining that a terminal cooperatively transmits the PUCCH towards multiple transmission reception point (TRP) directions, transmitting indication information; in which the indication information is configured to indicate the terminal to dynamically switch repetition transmission schemes, to cooperatively and repeatedly transmit the PUCCH towards the multiple TRP directions; and the repetition transmission schemes include an inter-slot repetition transmission scheme, an intra-slot repetition transmission scheme based on beam hopping, and an intra-slot repetition transmission scheme based on sub-slot.

In an implementation, transmitting the indication information includes: transmitting a sub-slot transmission configuration parameter, in which the sub-slot transmission configuration parameter is configured to indicate sub-slot resource information occupied by cooperatively and repeatedly transmitting the PUCCH towards the multiple TRP directions.

In an implementation, transmitting the sub-slot transmission configuration parameter includes: configuring a radio resource control (RRC) signaling, in which the RRC signaling includes PUCCH configuration information, and the PUCCH configuration information configures sub-slot configuration length information at a PUCCH resource level or a PUCCH resource set level or a PUCCH format level.

In an implementation, the communication method for the PUCCH further includes: enabling the sub-slot transmission configuration parameter, to achieve switching from the inter-slot repetition transmission scheme to the intra-slot repetition transmission scheme based on sub-slot, or switching from the intra-slot repetition transmission scheme based on beam hopping to the intra-slot repetition transmission scheme based on sub-slot; or disabling the sub-slot transmission configuration parameter, to achieve switching from the intra-slot repetition transmission scheme based on sub-slot to the inter-slot repetition transmission scheme, or switching from the intra-slot repetition transmission scheme based on sub-slot to the intra-slot repetition transmission scheme based on beam hopping.

In an implementation, the communication method for the PUCCH further includes: reconfiguring the sub-slot transmission configuration parameter as an invalid transmission configuration parameter, to achieve dynamic switching between the inter-slot repetition transmission scheme and the intra-slot repetition transmission scheme based on sub-slot.

In an implementation, the communication method for the PUCCH further includes: modifying the sub-slot transmission configuration parameter to a size of resources occupied by the sub-slot, to achieve switching from the inter-slot repetition transmission scheme to the intra-slot repetition transmission scheme based on sub-slot.

In an implementation, transmitting the indication information includes: transmitting a slot number configuration parameter, in which the slot number configuration parameter is configured to indicate a number of slots occupied by cooperatively transmitting the PUCCH towards the multiple TRP directions for repetition transmission.

In an implementation, the communication method for the PUCCH further includes: enabling the slot number configuration parameter, to achieve switching from the intra-slot repetition transmission scheme based on beam hopping to the inter-slot repetition transmission scheme, or switching from the intra-slot repetition transmission scheme based on beam hopping to the intra-slot repetition transmission scheme based on sub-slot; or disabling the slot number configuration parameter, to achieve switching from the inter-slot repetition transmission scheme to the intra-slot repetition transmission scheme based on beam hopping, or switching from the intra-slot repetition transmission scheme based on sub-slot to the intra-slot repetition transmission scheme based on beam hopping.

In an implementation, the communication method for the PUCCH further includes: reconfiguring the slot number configuration parameter, to achieve switching from the inter-slot repetition transmission scheme to the intra-slot repetition transmission scheme based on beam hopping, or switching from the intra-slot repetition transmission scheme based on sub-slot to the intra-slot repetition transmission scheme based on beam hopping.

In an implementation, transmitting the indication information includes: transmitting PUCCH resource configuration information, in which the PUCCH resource configuration information includes first PUCCH resource configuration information, or second PUCCH resource configuration information, or third PUCCH resource configuration information; and the first PUCCH resource configuration information corresponds to the inter-slot repetition transmission scheme, the second PUCCH resource configuration information corresponds to the intra-slot repetition transmission scheme based on beam hopping, and the third PUCCH resource configuration information corresponds to the intra-slot repetition transmission scheme based on sub-slot.

According to a second aspect of embodiments of the disclosure, a communication method for a PUCCH is provided and performed by a terminal. The communication method for the PUCCH includes: receiving indication information, in which the indication information is configured to indicate the terminal to dynamically switch repetition transmission schemes, to cooperatively and repeatedly transmit the PUCCH towards multiple TRP directions; and the repetition transmission schemes include an inter-slot repetition transmission scheme, an intra-slot repetition transmission scheme based on beam hopping, and an intra-slot repetition transmission scheme based on sub-slot; and cooperatively transmitting the PUCCH towards the multiple TRP directions based on the indication information.

In an implementation, receiving the indication information includes: receiving a sub-slot transmission configuration parameter, in which the sub-slot transmission configuration parameter is configured to indicate sub-slot resource information occupied by cooperatively and repeatedly transmitting the PUCCH towards the multiple TRP directions.

In an implementation, receiving the sub-slot transmission configuration parameter includes: receiving an RRC signaling, in which the RRC signaling includes PUCCH configuration information, and the PUCCH configuration information configures sub-slot configuration length information at a PUCCH resource level or a PUCCH resource set level or a PUCCH format level.

In an implementation, transmitting the PUCCH towards the multiple TRP directions includes: in response to the sub-slot transmission configuration parameter being enabled, switching from the inter-slot repetition transmission scheme to the intra-slot repetition transmission scheme based on sub-slot, and cooperatively transmitting the PUCCH towards the multiple TRP directions, or switching from the intra-slot repetition transmission scheme based on beam hopping to the intra-slot repetition transmission scheme based on sub-slot, and cooperatively transmitting the PUCCH towards the multiple TRP directions; or, in response to the sub-slot transmission configuration parameter being disabled, switching from the intra-slot repetition transmission scheme based on sub-slot to the inter-slot repetition transmission scheme, and cooperatively transmitting the PUCCH towards the multiple TRP directions, or switching from the intra-slot repetition transmission scheme based on sub-slot to the intra-slot repetition transmission scheme based on beam hopping, and cooperatively transmitting the PUCCH towards the multiple TRP directions.

In an implementation, transmitting the PUCCH towards the multiple TRP directions includes: in response to the sub-slot transmission configuration parameter being reconfigured as an invalid transmission configuration parameter, dynamically switching between the inter-slot repetition transmission scheme and the intra-slot repetition transmission scheme based on sub-slot, and cooperatively transmitting the PUCCH towards the multiple TRP directions.

In an implementation, transmitting the PUCCH towards the multiple TRP directions includes: in response to the sub-slot transmission configuration parameter being modified to a size of resources occupied by the sub-slot, switching from the inter-slot repetition transmission scheme to the intra-slot repetition transmission scheme based on sub-slot, and cooperatively transmitting the PUCCH towards the multiple TRP directions.

In an implementation, receiving the indication information includes: receiving a slot number configuration parameter, in which the slot number configuration parameter is configured to indicate a number of slots occupied by cooperatively transmitting the PUCCH towards the multiple TRP directions for repetition transmission.

In an implementation, transmitting the PUCCH towards the multiple TRP directions includes: in response to the slot number configuration parameter being enabled, switching from the intra-slot repetition transmission scheme based on beam hopping to the inter-slot repetition transmission scheme, and cooperatively transmitting the PUCCH towards the multiple TRP directions, or switching from the intra-slot repetition transmission scheme based on beam hopping to the intra-slot repetition transmission scheme based on sub-slot, and cooperatively transmitting the PUCCH towards the multiple TRP directions; or, in response to the slot number configuration parameter being disabled, switching from the inter-slot repetition transmission scheme to the intra-slot repetition transmission scheme based on beam hopping, and cooperatively transmitting the PUCCH towards the multiple TRP directions, or switching from the intra-slot repetition transmission scheme based on sub-slot to the intra-slot repetition transmission scheme based on beam hopping, and cooperatively transmitting the PUCCH towards the multiple TRP directions.

In an implementation, transmitting the PUCCH towards the multiple TRP directions includes: in response to the slot number configuration parameter being reconfigured, switching from the inter-slot repetition transmission scheme to the intra-slot repetition transmission scheme based on beam hopping, and cooperatively transmitting the PUCCH towards the multiple TRP directions, or switching from the intra-slot repetition transmission scheme based on sub-slot to the intra-slot repetition transmission scheme based on beam hopping, and cooperatively transmitting the PUCCH towards the multiple TRP directions.

In an implementation, the indication information includes PUCCH resource configuration information, in which the PUCCH resource configuration information includes first PUCCH resource configuration information, or second PUCCH resource configuration information, or third PUCCH resource configuration information; and transmitting the PUCCH towards the multiple TRP directions based on the indication information includes: in response to the PUCCH resource configuration information including the first PUCCH resource configuration information, cooperatively transmitting the PUCCH towards the multiple TRP directions by adopting the inter-slot repeated transmission scheme; in response to the PUCCH resource configuration information including the second PUCCH resource configuration information, cooperatively transmitting the PUCCH towards the multiple TRP directions by adopting the intra-slot repetition transmission scheme based on beam hopping; and in response to the PUCCH resource configuration information including the third PUCCH resource configuration information, cooperatively transmitting the PUCCH towards the multiple TRP directions by adopting the intra-slot repetition transmission scheme based on sub-slot.

According to a third aspect of embodiments of the disclosure, a communication apparatus for a PUCCH is provided and applicable to a network device. The communication apparatus for the PUCCH includes: a transmitting unit, configured to, in response to determining that a terminal cooperatively transmits the PUCCH towards multiple TRP directions, transmit indication information; in which the indication information is configured to indicate the terminal to dynamically switch repetition transmission schemes, to cooperatively and repeatedly transmit the PUCCH towards the multiple TRP directions; and the repetition transmission schemes include an inter-slot repetition transmission scheme, an intra-slot repetition transmission scheme based on beam hopping, and an intra-slot repetition transmission scheme based on sub-slot.

In an implementation, the transmitting unit transmits a sub-slot transmission configuration parameter, in which the sub-slot transmission configuration parameter is configured to indicate sub-slot resource information occupied by cooperatively and repeatedly transmitting the PUCCH towards the multiple TRP directions.

In an implementation, the transmitting unit configures an RRC signaling, in which the RRC signaling includes PUCCH configuration information, and the PUCCH configuration information configures sub-slot configuration length information at a PUCCH resource level or a PUCCH resource set level or a PUCCH format level.

In an implementation, the transmitting unit is further configured to enable the sub-slot transmission configuration parameter, to achieve switching from the inter-slot repetition transmission scheme to the intra-slot repetition transmission scheme based on sub-slot, or switching from the intra-slot repetition transmission scheme based on beam hopping to the intra-slot repetition transmission scheme based on sub-slot; or disable the sub-slot transmission configuration parameter, to achieve switching from the intra-slot repetition transmission scheme based on sub-slot to the inter-slot repetition transmission scheme, or switching from the intra-slot repetition transmission scheme based on sub-slot to the intra-slot repetition transmission scheme based on beam hopping.

In an implementation, the transmitting unit is further configured to reconfigure the sub-slot transmission configuration parameter as an invalid transmission configuration parameter, to achieve dynamic switching between the inter-slot repetition transmission scheme and the intra-slot repetition transmission scheme based on sub-slot.

In an implementation, the transmitting unit is further configured to modify the sub-slot transmission configuration parameter to a size of resources occupied by the sub-slot, to achieve switching from the inter-slot repetition transmission scheme to the intra-slot repetition transmission scheme based on sub-slot.

In an implementation, the transmitting unit transmits a slot number configuration parameter, in which the slot number configuration parameter is configured to indicate a number of slots occupied by cooperatively transmitting the PUCCH towards the multiple TRP directions for repetition transmission.

In an implementation, the transmitting unit is further configured to: enable the slot number configuration parameter, to achieve switching from the intra-slot repetition transmission scheme based on beam hopping to the inter-slot repetition transmission scheme, or switching from the intra-slot repetition transmission scheme based on beam hopping to the intra-slot repetition transmission scheme based on sub-slot; or disable the slot number configuration parameter, to achieve switching from the inter-slot repetition transmission scheme to the intra-slot repetition transmission scheme based on beam hopping, or switching from the intra-slot repetition transmission scheme based on sub-slot to the intra-slot repetition transmission scheme based on beam hopping.

In an implementation, the transmitting unit is further configured to reconfigure the slot number configuration parameter, to achieve switching from the inter-slot repetition transmission scheme to the intra-slot repetition transmission scheme based on beam hopping, or switching from the intra-slot repetition transmission scheme based on sub-slot to the intra-slot repetition transmission scheme based on beam hopping.

In an implementation, the transmitting unit transmits PUCCH resource configuration information, in which the PUCCH resource configuration information includes first PUCCH resource configuration information, or second PUCCH resource configuration information, or third PUCCH resource configuration information; and the first PUCCH resource configuration information corresponds to the inter-slot repetition transmission scheme, the second PUCCH resource configuration information corresponds to the intra-slot repetition transmission scheme based on beam hopping, and the third PUCCH resource configuration information corresponds to the intra-slot repetition transmission scheme based on sub-slot.

According to a fourth aspect of embodiments of the disclosure, a communication apparatus for a PUCCH is provided, and performed by a terminal. The communication apparatus for the PUCCH includes: a receiving unit, configured to receive indication information, in which the indication information is configured to indicate the terminal to dynamically switch repetition transmission schemes, to cooperatively and repeatedly transmit the PUCCH towards multiple TRP directions; and the repetition transmission schemes include an inter-slot repetition transmission scheme, an intra-slot repetition transmission scheme based on beam hopping, and an intra-slot repetition transmission scheme based on sub-slot; and a transmitting unit, configured to cooperatively transmit the PUCCH towards the multiple TRP directions based on the indication information.

In an implementation, the receiving unit receives a sub-slot transmission configuration parameter, in which the sub-slot transmission configuration parameter is configured to indicate sub-slot resource information occupied by cooperatively and repeatedly transmitting the PUCCH towards the multiple TRP directions.

In an implementation, the receiving unit receives an RRC signaling, in which the RRC signaling includes PUCCH configuration information, and the PUCCH configuration information configures sub-slot configuration length information at a PUCCH resource level or a PUCCH resource set level or a PUCCH format level.

In an implementation, in response to the sub-slot transmission configuration parameter being enabled, the transmitting unit switches from the inter-slot repetition transmission scheme to the intra-slot repetition transmission scheme based on sub-slot, and cooperatively transmits the PUCCH towards the multiple TRP directions, or switches from the intra-slot repetition transmission scheme based on beam hopping to the intra-slot repetition transmission scheme based on sub-slot, and cooperatively transmits the PUCCH towards the multiple TRP directions; or, in response to the sub-slot transmission configuration parameter being disabled, the transmitting unit switches from the intra-slot repetition transmission scheme based on sub-slot to the inter-slot repetition transmission scheme, and cooperatively transmits the PUCCH towards the multiple TRP directions, or switches from the intra-slot repetition transmission scheme based on sub-slot to the intra-slot repetition transmission scheme based on beam hopping, and cooperatively transmits the PUCCH towards the multiple TRP directions.

In an implementation, in response to the sub-slot transmission configuration parameter being reconfigured as an invalid transmission configuration parameter, the transmitting unit dynamically switches between the inter-slot repetition transmission scheme and the intra-slot repetition transmission scheme based on sub-slot, and cooperatively transmits the PUCCH towards the multiple TRP directions.

In an implementation, in response to the sub-slot transmission configuration parameter being modified to a size of resources occupied by the sub-slot, the transmitting unit switches from the inter-slot repetition transmission scheme to the intra-slot repetition transmission scheme based on sub-slot, and cooperatively transmits the PUCCH towards the multiple TRP directions.

In an implementation, the receiving unit receives a slot number configuration parameter, in which the slot number configuration parameter is configured to indicate a number of slots occupied by cooperatively transmitting the PUCCH towards the multiple TRP directions for repetition transmission.

In an implementation, in response to the slot number configuration parameter being enabled, the transmitting unit switches from the intra-slot repetition transmission scheme based on beam hopping to the inter-slot repetition transmission scheme, and cooperatively transmits the PUCCH towards the multiple TRP directions, or switches from the intra-slot repetition transmission scheme based on beam hopping to the intra-slot repetition transmission scheme based on sub-slot, and cooperatively transmits the PUCCH towards the multiple TRP directions; or, in response to the slot number configuration parameter being disabled, the transmitting unit switches from the inter-slot repetition transmission scheme to the intra-slot repetition transmission scheme based on beam hopping, and cooperatively transmits the PUCCH towards the multiple TRP directions, or switches from the intra-slot repetition transmission scheme based on sub-slot to the intra-slot repetition transmission scheme based on beam hopping, and cooperatively transmits the PUCCH towards the multiple TRP directions.

In an implementation, in response to the slot number configuration parameter being reconfigured, the transmitting unit switches from the inter-slot repetition transmission scheme to the intra-slot repetition transmission scheme based on beam hopping, and cooperatively transmits the PUCCH towards the multiple TRP directions, or switches from the intra-slot repetition transmission scheme based on sub-slot to the intra-slot repetition transmission scheme based on beam hopping, and cooperatively transmits the PUCCH towards the multiple TRP directions.

In an implementation, the indication information includes PUCCH resource configuration information, in which the PUCCH resource configuration information includes first PUCCH resource configuration information, or second PUCCH resource configuration information, or third PUCCH resource configuration information; and in response to the PUCCH resource configuration information including the first PUCCH resource configuration information, the transmitting unit cooperatively transmits the PUCCH towards the multiple TRP directions by adopting the inter-slot repeated transmission scheme; in response to the PUCCH resource configuration information including the second PUCCH resource configuration information, the transmitting unit cooperatively transmits the PUCCH towards the multiple TRP directions by adopting the intra-slot repetition transmission scheme based on beam hopping; and in response to the PUCCH resource configuration information including the third PUCCH resource configuration information, the transmitting unit cooperatively transmits the PUCCH towards the multiple TRP directions by adopting the intra-slot repetition transmission scheme based on sub-slot.

According to a fifth aspect of embodiments of the disclosure, a communication device for a PUCCH is provided and includes: a processor; and a memory for storing instructions executable by the processor; in which, the processor is configured to perform the communication method for the PUCCH according to the first aspect or any one implementation of the first aspect.

According to a sixth aspect of embodiments of disclosure a communication device for a PUCCH is provided and includes: a processor; and a memory for storing instructions executable by the processor; in which, the processor is configured to perform the communication method for the PUCCH according to the second aspect or any one implementation of the second aspect.

According to a seventh aspect of embodiments of the disclosure, a storage medium storing instructions is provided. When the instructions in the storage medium are executed by a processor of a network device, the network device is caused to perform the communication method for the PUCCH according to the first aspect or any one implementation of the first aspect.

According to an eighth aspect of embodiments of the disclosure, a storage medium storing instructions is provided. When the instructions in the storage medium are executed by a processor of a terminal, the terminal is caused to perform the communication method for the PUCCH according to the second aspect or any one implementation of the second aspect.

The technical solutions according to embodiments of the disclosure may include the following beneficial effects. The network device transmits the indication information, to indicate the terminal to dynamically switch repetition transmission schemes. The terminal receives the indication information to dynamically switch the repetition transmission schemes, to transmit cooperatively and repeatedly the PUCCH towards the multiple TRP directions, when transmitting cooperatively the PUCCH towards the multiple TRP directions. The terminal dynamically switches the repetition transmission schemes to increase the flexibility and efficiency of system scheduling.

It is to be understood that both the foregoing general description and the following detailed description are exemplary and explanatory only and are not restrictive of the disclosure.

### BRIEF DESCRIPTION OF THE DRAWINGS

The accompanying drawings, which are incorporated in and constitute a part of this specification, illustrate embodiments consistent with the disclosure and, together with the description, serve to explain the principles of the disclosure.
FIG. 1 is an architecture diagram illustrating a wireless communication system according to some embodiments.
FIG. 2 is a diagram illustrating a PUCCH repetition transmission.
FIG. 3 is a transmission diagram illustrating an intra-slot repetition transmission scheme based on frequency hopping.
FIG. 4 is a transmission diagram illustrating an intra-slot repetition transmission scheme based on sub-slot.
FIG. 5 is a flowchart illustrating a communication method for a PUCCH according to some embodiments.
FIG. 6 is a flowchart illustrating a communication method for a PUCCH according to some embodiments.
FIG. 7 is a flowchart illustrating a communication method for a PUCCH according to some embodiments.
FIG. 8 is a flowchart illustrating a communication method for a PUCCH according to some embodiments.
FIG. 9 is a flowchart illustrating a communication method for a PUCCH according to some embodiments.
FIG. 10 is a flowchart illustrating a communication method for a PUCCH according to some embodiments.
FIG. 11 is a flowchart illustrating a communication method for a PUCCH according to some embodiments.
FIG. 12 is a flowchart illustrating a communication method for a PUCCH according to some embodiments.
FIG. 13 is a flowchart illustrating a communication method for a PUCCH according to some embodiments.
FIG. 14 is a flowchart illustrating a communication method for a PUCCH according to some embodiments.
FIG. 15 is a flowchart illustrating a communication method for a PUCCH according to some embodiments.
FIG. 16 is a flowchart illustrating a communication method for a PUCCH according to some embodiments.
FIG. 17 is a flowchart illustrating a communication method for a PUCCH according to some embodiments.
FIG. 18 is a flowchart illustrating a communication method for a PUCCH according to some embodiments.
FIG. 19 is a flowchart illustrating a communication method for a PUCCH according to some embodiments.
FIG. 20 is a flowchart illustrating a communication method for a PUCCH according to some embodiments.
FIG. 21 is a flowchart illustrating a communication method for a PUCCH according to some embodiments.
FIG. 22 is a block diagram illustrating a communication apparatus for a PUCCH according to some embodiments.
FIG. 23 is a block diagram illustrating a communication apparatus for a PUCCH according to some embodiments.
FIG. 24 is a block diagram illustrating a communication device for a PUCCH according to some embodiments.
FIG. 25 is a block diagram illustrating a communication device for a PUCCH according to some embodiments.

### DETAILED DESCRIPTION

Reference will now be made in detail to some embodiments, examples of which are illustrated in the accompanying drawings. The following description refers to the accompanying drawings in which the same numbers in different drawings represent the same or similar elements unless otherwise represented. The implementations set forth in the following description of some embodiments do not represent all implementations consistent with the disclosure. Instead, they are merely examples of apparatuses and methods consistent with aspects related to the disclosure as recited in the appended claims.

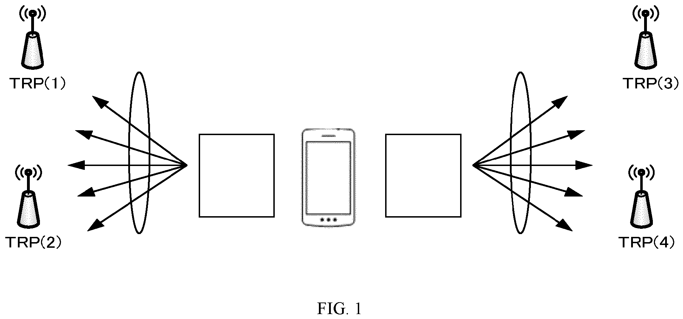

A communication method for a physical uplink control channel (PUCCH) provided in embodiments of the disclosure is applicable to a wireless communication system as illustrated in FIG. 1. As illustrated in FIG. 1, the wireless communication system includes a network device and a terminal. The terminal is connected to the network device and performs data transmission/reception with the network device via a wireless resource. The data transmission/reception between the network device and the terminal is performed based on beams. A physical uplink shared channel (PUSCH) enhancement between the network device and the terminal may be performed based on multiple transmission reception points (TRPs) (multi-TRP). As illustrated in FIG. 1, multiple TRPs transmit data towards the terminal in a downlink communication process. The terminal transmits data towards different TRPs in an uplink communication process.

It may be understood that there may be one or more TRPs where the network device performs data transmission/reception with the terminal based on the multi-TRP. The data transmission/reception between the network device and the terminal based on TRP (1), TRP (2), TRP (3) and TRP (4) in the wireless communication system as illustrated in FIG. 1 is only illustrative and is not limited herein.

It may be understood that, the wireless communication system as illustrated in FIG. 1 is only illustrative and the wireless communication system may further include other network devices not illustrated in FIG. 1, for example, a core network device, a wireless relay device and a wireless backhaul device. A number of network devices and a number of terminals included in the wireless communication system are not limited in embodiments of the disclosure.

It may be further understood that, the wireless communication system in embodiments of the disclosure is a network that provides a wireless communication function. The wireless communication system may adopt different communication technologies, for example, code division multiple access (CDMA), wideband code division multiple access (WCDMA), time division multiple access (TDMA), frequency division multiple access (FDMA), orthogonal frequency-division multiple access (OFDMA), single carrier FDMA (SC-FDMA) and carrier sense multiple access with collision avoidance. The network may be divided into a 2G (second generation) network, a 3G (third generation) network, a 4G (fourth generation) network, or a future evolution network for example a 5G (fifth generation) network which may also be referred to as a new radio (NR) network, based on different capacities, rates, latencies and other factors. For ease of description, the wireless communication network is simply referred to as the network in the disclosure sometimes.

Further, the network device involved in the disclosure may also be referred to as a wireless access network device. The wireless access network device may be a base station, an evolved base station (evolved node B), a home base station, an access point (AP) in a wireless fidelity (Wi-Fi) system, a wireless relay node, a wireless backhaul node, a transmission point (TP), or a transmission and reception point (TRP), etc., or a gNB in an NR system, or a component or part of devices constituting a base station. It should be understood that, a specific technology and a specific device form adopted by the network device are not limited in the embodiments of the disclosure. In the disclosure, the network device may provide a communication coverage for a specific geographic area and may communicate with a terminal located within a coverage area (cell). In addition, the network device further may be a vehicle-mounted device in an Internet of Vehicles (V2X) communication system.

Further, the terminal involved in the disclosure further may be referred to as a terminal device, a user equipment (UE), a mobile station (MS), a mobile terminal (MT), etc., which is a device that provides voice and/or data connectivity to a user. For example, the terminal may be a handheld device or a vehicle device, with a wireless connection function. The terminal may include, for example, a mobile phone, a customer premise equipment (CPE), a pocket personal computer (PPC), a palm computer, a personal digital assistant (PDA), a notebook computer, a tablet computer, a wearable device, or a vehicle-mounted device. In addition, the terminal device further may be a vehicle-mounted device in a V2X communication system. It should be understood that, a specific technology and a specific device form adopted by the terminal are not limited in the embodiments of the disclosure.

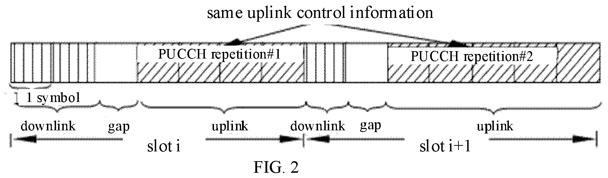

Data transmission/reception between the network device and the terminal is performed based on beams in the embodiments of the disclosure. The network device and the terminal may enhance the PUCCH based on a multi-point cooperative transmission technology among multiple TRPs/PANELs. The PUCCH enhancement may be a repetition transmission mechanism in multiple slots. FIG. 2 is a diagram illustrating a PUCCH repetition transmission. As illustrated in FIG. 2, different PUCCH resources are transmitted based on the same transmission symbol length on different transmission occasions (TOs) of each slot. One PUCCH repetition transmission only uses one PUCCH resource, and the PUCCH resource configures one beam direction i.e. spatialRelationInfo, which is applicable to all TOs. The network configures a corresponding number of repetition transmissions supported for a PUCCH format via a radio resource control (RRC) high-level signaling, an indication range is defined as {1,2,4,8}, and different PUCCH resources may correspond to different PUCCH formats.

In the PUCCH enhancement based on the multi-TRP in the R17, the PUCCH supports transmitting cooperatively the same transport block (TB) towards different TRP directions on different TOs, to further improve the transmission reliability by using the spatial multiplexing transmission. For a PUCCH channel transmission, a possible enhancement scheme in the R17 may include the following.

A first scheme: an inter-slot repetition scheme (that is, scheme 1)
Similar to a TDM repetition scheme in the R15/16, it achieves a time-division cooperative transmission on multiple slots towards multiple beam directions of multiple TRPs. A number of repetition transmission slots is a configured number of slots occupied by transmissions. Resource allocation of each slot is the same, that is, a PUCCH repetition version may be transmitted by using the same time-frequency resource on each slot.

A second scheme: an intra-slot repetition scheme, which is not supported in an existing protocol, that is, a time-sharing joint transmission is performed on one slot towards multiple beam directions of multiple TRPs. However, there may be two repetition schemes for the intra-slot repetition scheme.

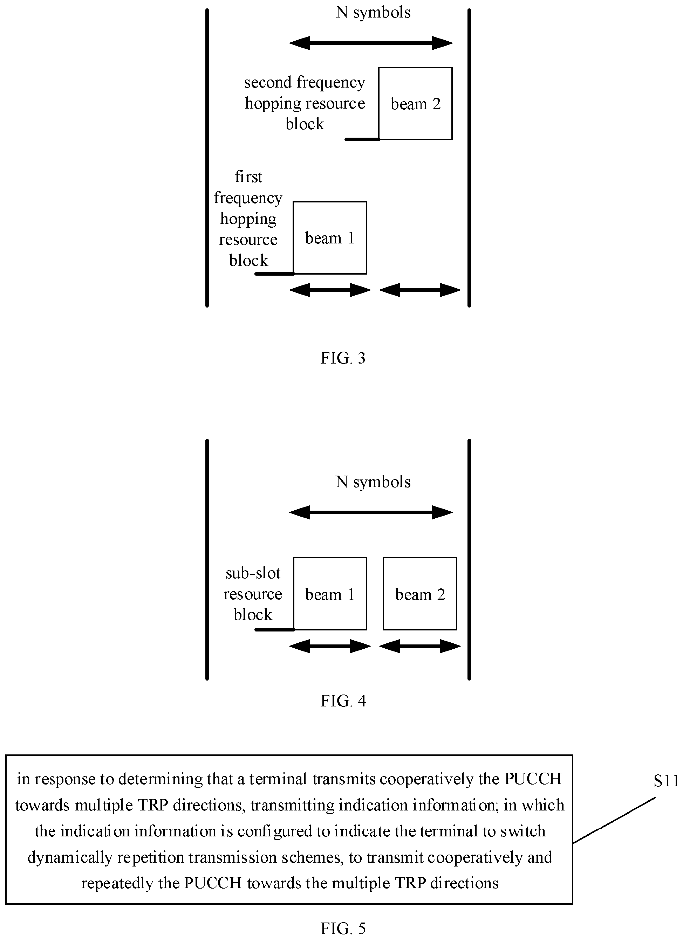

A: A scheme based on an intra-slot frequency hopping transmission (i.e. scheme 2), that is, transmissions are respectively performed in different beam directions on different symbol groups corresponding respectively to two hops within a slot within one PUCCH resource; and a frequency hopping (FH) function (an FH within the slot) may be enabled or disenabled. FIG. 3 is a diagram illustrating an intra-slot repetition transmission scheme based on frequency hopping. As illustrated in FIG. 3, PUCCH resources occupy N symbols. A first frequency hopping resource block within a slot occupies floor (N/2) time domain symbols and is mapped towards a beam direction corresponding to TRP1 for transmission, and a second frequency hopping resource block occupies N-floor (N/2) time domain symbols and is mapped towards a beam direction corresponding to TRP2 for transmission. Beam 1 and beam 2 are mapped on different frequency hopping resources within the same slot. When frequency hopping is enabled within a slot, initial frequency positions of different frequency hopping resources within the same slot are offset by a frequency deviation configured by the network. When frequency hopping is disenabled within the slot, initial frequencies of different frequency hopping resources within the same slot are the same.

The intra-slot repetition transmission scheme based on frequency hopping in embodiments of the disclosure may be understood as an intra-slot repetition transmission scheme based on beam hopping. Therefore, the intra-slot repetition transmission scheme based on frequency hopping in embodiments of the disclosure and the intra-slot repetition transmission scheme based on beam hopping sometimes will be used interchangeably, but those skilled in the art shall understand consistency of the meaning.

B: A scheme based on an intra-slot sub-slot (i.e., scheme 3): that is, a PUCCH repetition transmission is performed with a sub-slot as a unit within the slot, which is defined as a multiple transmissions of the slot (that is, a number of repetition transmissions K>=2), and transmissions may be performed respectively in different beam directions within each transmission opportunity (TO). FIG. 4 is a diagram illustrating an intra-slot repetition transmission scheme based on sub-slot. As illustrated in FIG. 4, a PUCCH resource occupies N symbols. A first sub-slot resource block within a slot occupies floor (N/2) time domain symbols and is mapped towards a beam direction corresponding to TRP1 for transmission, and a second sub-slot resource block occupies N-floor (N/2) time domain symbols and is mapped towards a beam direction corresponding to TRP2 for transmission. Beam 1 and beam 2 are mapped to different sub-slot resources within the same slot.

There are three mapping schemes as follows for example for mapping relationships between beam transmission directions of the PUCCH transmitted by the terminal towards different TRPs and different TOs. A high-level signaling may configure the beam mapping scheme used for the PUCCH transmission:

Scheme a: periodic mapping, two beam directions are sequentially and cyclically mapped to multiple configured TOs. For example, when there are 4 transmissions, a beam direction mapping pattern is #1#2#1#2.

Scheme b: continuous mapping, two beam directions are continuously and cyclically mapped to multiple configured TOs. For example, when there are 4 transmissions, a beam direction mapping pattern is #1#1#2#2, and for more than 4 transmissions, the pattern is repeated, and for 8 transmissions, a TCI state mapping pattern is #1#1#2#2#1#1#2#2.

Scheme c: half&half mapping, two beam directions are continuously and cyclically mapped to multiple configured TOs. For example, when there are 8 transmissions, a beam direction mapping pattern is #1#1#1#1#2#2#2#2.

Based on the above description, in the PUCCH enhancement based on the multi-TRP in the R17, enhancement schemes for different TRP transmissions may include an intra-slot transmission scheme (including scheme 2 & scheme 3) and an inter-slot transmission scheme (scheme 1). Moreover, most of parameters of different repetition transmission schemes are semi-static parameters configured by the RRC. However, different repetition transmission schemes may aim at different scenarios and service requirements. Then, when specific scenarios and services change, since most of parameters are semi-static parameters configured by the RRC, a configuration may not be changed dynamically in time, which needs to be solved by a network reconfiguration and may reduce the scheduling flexibility and efficiency of the system.

In view of this, a communication method for a PUCCH is provided in embodiments of the disclosure. In the communication method for the PUCCH, when the terminal cooperatively transmits the PUCCH towards multiple TRP directions, dynamic switching between different repetition schemes are supported, to improve the scheduling flexibility and efficiency of the system.

FIG. 5 is a flowchart illustrating a communication method for a PUCCH according to some embodiments. The communication method for the PUCCH may be executed alone or in combination with other embodiments of the disclosure. As illustrated in FIG. 5, the communication method for the PUCCH is performed by a network device and includes following step.

At step S11, in response to determining that a terminal transmits cooperatively the PUCCH towards multiple TRP directions, indication information is transmitted.

In embodiments of the disclosure, the indication information transmitted by the network device may be configured to indicate the terminal to switch dynamically repetition transmission schemes, to transmit cooperatively and repeatedly the PUCCH towards the multiple TRP directions.

Further, the repetition transmission schemes include an inter-slot repetition transmission scheme, an intra-slot repetition transmission scheme based on beam hopping, and an intra-slot repetition transmission scheme based on sub-slot.

In embodiments of the disclosure, when the network device determines that the terminal transmits cooperatively the PUCCH towards multiple TRP directions, a configuration and a dynamic switching mode between different PUCCH transmission schemes may be indicated by the indication information, so that the terminal may transmit cooperatively the PUCCH towards different TRP directions based on different transmission schemes. For example, when a number of spatial relation info of corresponding PUCCH resources, enabled by a media access control (MAC) control element (CE), is 2, the PUCCH is cooperatively transmitted towards different TRP directions based on different transmission schemes corresponding to the multi-TRP transmission.

In an implementation provided in embodiments of the disclosure, the network device may configure a sub-slot transmission configuration parameter to achieve switching between different repetition transmission schemes. That is, the network device may indicate, by transmitting the sub-slot transmission configuration parameter, sub-slot resource information occupied by transmitting cooperatively and repeatedly the PUCCH towards the multiple TRP directions.

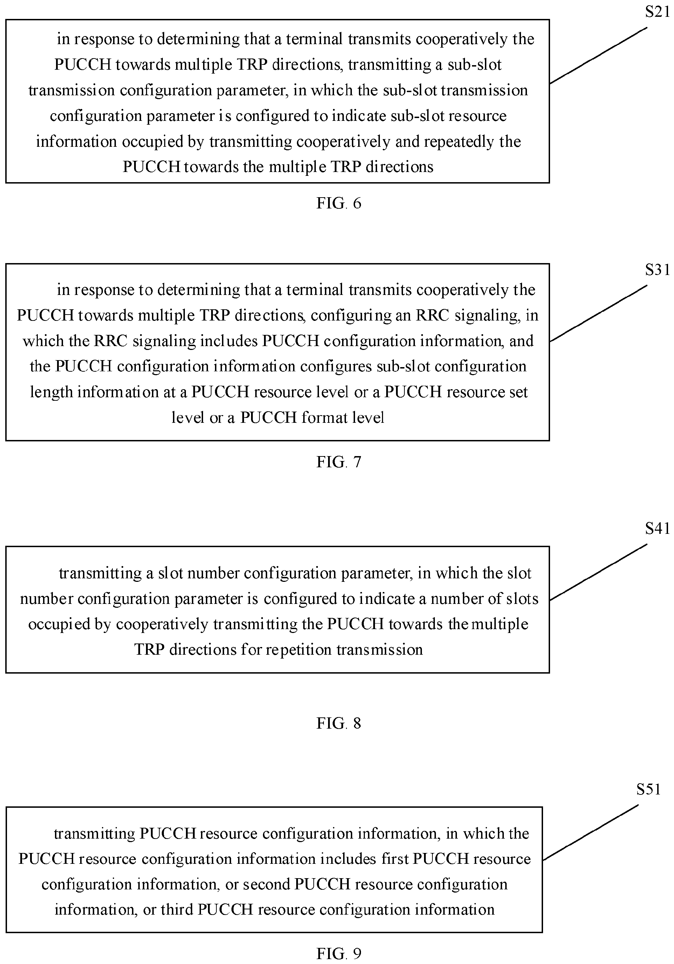

FIG. 6 is a flowchart illustrating a communication method for a PUCCH according to some embodiments. The communication method for the PUCCH may be executed alone or in combination with other embodiments of the disclosure. As illustrated in FIG. 6, the communication method for the PUCCH is performed by a network device and includes following step.

At step S21, in response to determining that a terminal transmits cooperatively the PUCCH towards multiple TRP directions, a sub-slot transmission configuration parameter is transmitted.

In embodiments of the disclosure, the sub-slot transmission configuration parameter is configured to indicate sub-slot resource information occupied by transmitting cooperatively and repeatedly the PUCCH towards the multiple TRP directions.

In embodiments of the disclosure, the sub-slot transmission configuration parameter may be configured to achieve dynamic switching between different repetition transmission schemes. For example, the network device configures the sub-slot transmission configuration parameter to achieve dynamic switching between scheme 1 and scheme 3. A sub-slot configuration of scheme 3 may be dynamically changed, to achieve dynamic switching between scheme 2 and scheme 3.

In embodiments of the disclosure, the sub-slot transmission configuration parameter may be semi-statically configured via the RRC signaling.

FIG. 7 is a flowchart illustrating a communication method for a PUCCH according to some embodiments. The communication method for the PUCCH may be executed alone or in combination with other embodiments of the disclosure. As illustrated in FIG. 7, the communication method for the PUCCH is performed by a network device and includes following step.

At step S31, in response to determining that a terminal transmits cooperatively the PUCCH towards multiple TRP directions, an RRC signaling is configured. The RRC signaling includes PUCCH configuration information, and the PUCCH configuration information configures sub-slot configuration length information at a PUCCH resource level or a PUCCH resource set level or a PUCCH format level.

For example, a subslot transmission configuration is performed by adding a subslotLengthForPUCCH parameter of a PUCCH resource level or a PUCCH format level into an RRC parameter PUCCH config. For example, the subslotLengthForPUCCH parameter may configure a subslot, for example, a length of 2 or 7 symbols or other values.

It may be understood that, the subslotLengthForPUCCH parameter in the related protocol is not configured to indicate a size of sub-slot resources of a PUCCH repetition transmission. In embodiments of the disclosure, the subslotLengthForPUCCH parameter indicates a size of sub-slot resources of a PUCCH repetition transmission to achieve dynamic switching between different repetition transmission schemes.

In embodiments of the disclosure, a subslot transmission configuration corresponding to the PUCCH resource may be configured or modified via the MAC-CE, to achieve dynamic switching between different repetition transmission schemes.

In embodiments of the disclosure, the sub-slot transmission configuration parameter may be enabled or disabled, so that the resource may be directly and dynamically switched between configurations of a slot repetition transmission scheme and a sub-slot repetition transmission scheme, which is suitable for a subsequent scheduling requirement.

In an implementation, in embodiments of the disclosure, the sub-slot transmission configuration parameter may be enabled, to achieve switching from the inter-slot repetition transmission scheme to the intra-slot repetition transmission scheme based on sub-slot, or switching from the intra-slot repetition transmission scheme based on beam hopping to the intra-slot repetition transmission scheme based on sub-slot.

For example, when the current PUCCH configuration scheme is scheme 1 for occupying 2 symbols within each slot for 4 repetition transmissions, the sub-slot transmission configuration parameter may be enabled via the MAC-CE, and the resource configuration manner may be dynamically switched from an inter-slot repetition transmission to a sub-slot repetition transmission scheme of scheme 3 when other transmission parameters may be unchanged, that is, each sub-slot within a slot occupies 2 symbols for 4 repetition transmissions.

For another example, when the current PUCCH configuration scheme is scheme 2 for occupying 7 symbols within a slot, after the sub-slot transmission configuration parameter is enabled via the MAC-CE, the resource configuration manner may be dynamically switched to a sub-slot repetition transmission scheme, that is, each sub-slot occupies 7 symbols, and a transmission number parameter needs to be modified at the same time, to achieve dynamic switching of scheme 3.

In another implementation, in embodiments of the disclosure, the sub-slot transmission configuration parameter may be disabled, to achieve switching from the intra-slot repetition transmission scheme based on sub-slot to the inter-slot repetition transmission scheme, or switching from the intra-slot repetition transmission scheme based on sub-slot to the intra-slot repetition transmission scheme based on beam hopping.

For example, when the current PUCCH configuration scheme is scheme 1 for occupying 2 symbols within each slot for 4 repetition transmissions, if the sub-slot transmission configuration parameter is disabled, the resource configuration manner may be dynamically switched from a sub-slot repetition scheme of scheme 3 (each sub-slot occupies 2 symbols within the slot for 4 repetition transmissions) to an inter-slot repetition transmission scheme of scheme 1.

For another example, when the current PUCCH configuration scheme is scheme 2 for occupying 7 symbols within a slot, after the sub-slot transmission configuration parameter is disabled, the resource configuration manner may be dynamically switched from a sub-slot repetition transmission scheme (each sub-slot occupies 7 symbols) to an inter-slot repetition transmission scheme. And a transmission number parameter needs to be modified, to achieve dynamic switching between scheme 3 and scheme 2.

In embodiments of the disclosure, the sub-slot transmission configuration parameter is reconfigured as an invalid transmission configuration parameter to achieve dynamic switching of the repetition transmission schemes. For example, the sub-slot transmission configuration parameter is reconfigured as an invalid transmission configuration parameter, to achieve dynamic switching between the inter-slot repetition transmission scheme and the intra-slot repetition transmission scheme based on sub-slot.

In embodiments of the disclosure, the sub-slot transmission configuration parameter is reconfigured as an invalid transmission configuration parameter, which may be understood that the sub-slot transmission configuration parameter is not used in the current repetition transmission scheme.

In an example, the sub-slot transmission configuration parameter is reconfigured as an invalid transmission configuration parameter to indicate to use a repetition transmission scheme of scheme 1. Alternatively, a size configuration of a sub-slot may be directly changed, to be adapted to the current scheduling requirement. For example, the subslotLengthForPUCCH parameter may configure a numerical value "0" to indicate a transmission at a slot level. And, dynamic switching between scheme 1 and scheme 3 is achieved by reconfiguring the parameter under scheme 3 configuration.

In an implementation, in embodiments of the disclosure, the sub-slot transmission configuration parameter may be modified to a size of resources occupied by the sub-slot, to achieve switching from the inter-slot repetition transmission scheme to the intra-slot repetition transmission scheme based on sub-slot.

For example, a size of resources occupied by a specific sub-slot in scheme 3 is achieved by modifying a specific numerical value of the sub-slot transmission configuration parameter. For example, the current transmission configuration with the sub-slot being 7 symbols may be changed to the transmission configuration with the sub-slot being 2 symbols, which be directly used for the scheduling transmission.

In the communication method for the PUCCH provided in embodiments of the disclosure, a slot number configuration parameter (an nrofslots parameter) may be configured to achieve dynamic switching between different repetition transmission schemes.

FIG. 8 is a flowchart illustrating a communication method for a PUCCH according to some embodiments. The communication method for the PUCCH may be executed alone or in combination with other embodiments of the disclosure. As illustrated in FIG. 8, the communication method for the PUCCH is performed by a network device and includes following step.

At step S41, a slot number configuration parameter is transmitted. The slot number configuration parameter is configured to indicate a number of slots occupied by transmitting cooperatively the PUCCH towards the multiple TRP directions for repetition transmission.

In embodiments of the disclosure, the network device configures and transmits the slot number configuration parameter, to indicate a number of slots occupied by transmitting cooperatively the PUCCH towards the multiple TRP directions for repetition transmission, further to achieve dynamic switching between scheme 1 and scheme 2, and dynamic switching between scheme 2 and scheme 3.

In an implementation, in embodiments of the disclosure, a transmission number parameter (a slot number configuration parameter) corresponding to the PUCCH resource may be modified via the MAC-CE, to achieve dynamic switching between different repetition transmission schemes.

In an implementation of embodiments of the disclosure, the slot number configuration parameter may be enabled or disabled, to achieve direct dynamic switching between configurations of a slot retransmission and a beam hopping retransmission scheme, which is suitable for a subsequent scheduling requirement.

For example, in embodiments of the disclosure, the slot number configuration parameter may be enabled, to achieve switching from the intra-slot repetition transmission scheme based on beam hopping to the inter-slot repetition transmission scheme, or switching from the intra-slot repetition transmission scheme based on beam hopping to the intra-slot repetition transmission scheme based on sub-slot.

In an example, when a scheme 1 PUCCH resource of 4 inter-slot repetition transmissions and 4 symbols is configured, a repetition transmission number parameter K is enabled via the MAC-CE, so that a beam hopping repetition transmission scheme of 4 symbols (that is, scheme 2) may be switched to an inter-slot repetition transmission scheme (that is, scheme 1). The same applies to switching between scheme 2 and scheme 3.

For example, in embodiments of the disclosure, the slot number configuration parameter may be disabled, to achieve switching from the inter-slot repetition transmission scheme to the intra-slot repetition transmission scheme based on beam hopping, or switching from the intra-slot repetition transmission scheme based on sub-slot to the intra-slot repetition transmission scheme based on beam hopping.

In an example, when a scheme 1 PUCCH resource of 4 inter-slot repetition transmissions and 4 symbols is configured, a repetition transmission number parameter K is disabled via the MAC-CE, it is switched to a beam hopping repetition transmission scheme of 4 symbols (that is, scheme 2) by default. The same applies to switching between scheme 2 and scheme 3.

In another implementation of embodiments of the disclosure, the slot number configuration parameter is reconfigured to achieve switching from the inter-slot repetition transmission scheme to the intra-slot repetition transmission scheme based on beam hopping, or the intra-slot repetition transmission scheme based on sub-slot is switched to the intra-slot repetition transmission scheme based on beam hopping.

In an example, the parameter configuration of scheme 2 is modified to 1. When a scheme 1 PUCCH resource of 4 inter-slot repetition transmissions and 4 symbols is configured, a slot number parameter configuration parameter (a repetition transmission number parameter K=1) is modified via the MAC-CE, so that it is switched to a beam frequency hopping repetition transmission scheme of 4 symbols by default (that is scheme 2). The same applies to switching between scheme 2 and scheme 3.

In the communication method for the PUCCH provided in embodiments of the disclosure, dynamic switching between different repetition transmission schemes may be achieved by PUCCH resource configuration information. For example, different PUCCH resource configuration information corresponding to scheme 1, scheme 2 and scheme 3 are respectively configured in the same PUCCH resource set. The DCI indicates a PUCCH resource indicator (PRI) to enable a current scheduling transmission scheme. The PRI may be understood as a PUCCH resource indicator, and is used to indicate which PUCCH resource transmission in the current PUCCH group is specifically used in the scheduling. It may be further understood that, the network device may configure the current PUCCH transmission scheme via an RRC signaling.

FIG. 9 is a flowchart illustrating a communication method for a PUCCH according to some embodiments. The communication method for the PUCCH may be executed alone or in combination with other embodiments of the disclosure. As illustrated in FIG. 9, the communication method for the PUCCH is performed by a network device and includes following step.

At step S51, PUCCH resource configuration information is transmitted. The PUCCH resource configuration information includes first PUCCH resource configuration information, or second PUCCH resource configuration information, or third PUCCH resource configuration information.

The first PUCCH resource configuration information corresponds to the inter-slot repetition transmission scheme, the second PUCCH resource configuration information corresponds to the intra-slot repetition transmission scheme based on beam hopping, and the third PUCCH resource configuration information corresponds to the intra-slot repetition transmission scheme based on sub-slot.

In embodiments of the disclosure, the network device transmits PUCCH resource configuration information, to indicate the terminal to adopt a repetition transmission scheme corresponding to the PUCCH resource configuration information, to cooperatively transmit the PUCCH towards the multiple TRP directions.

In an example, the current PUCCH transmission scheme is adopting an inter-slot repetition transmission scheme corresponding to the first PUCCH resource configuration information. When the network device transmits the third PUCCH resource configuration information, it may be dynamically switched to an intra-slot repetition transmission scheme based on sub-slot corresponding to the third PUCCH resource configuration information.

In the communication method for the PUCCH provided in embodiments of the disclosure, switching between different PUCCH information transmission schemes under the multi-TRP transmission is achieved by different manners, which may enhance the scheduling flexibility, adapt to channel and service changes more quickly and flexibly, reduce a latency, utilize system resources more effectively, and improve a system performance.

Based on the same concept, a communication method for a PUCCH is provided in embodiments of the disclosure and performed by a terminal.

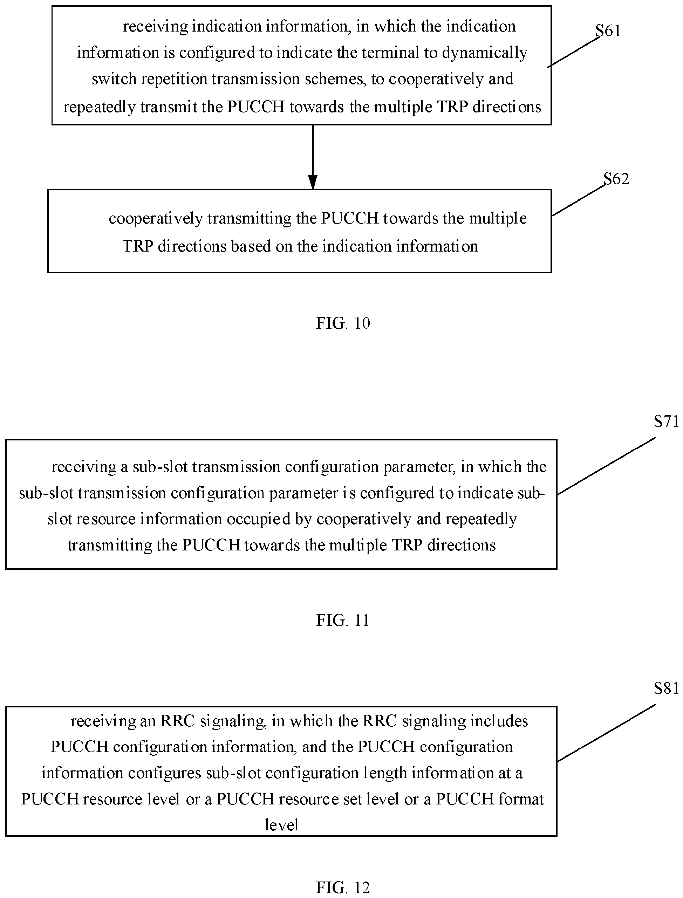

FIG. 10 is a flowchart illustrating a communication method for a PUCCH according to some embodiments. The communication method for the PUCCH may be executed alone or in combination with other embodiments of the disclosure. As illustrated in FIG. 10, the communication method for the PUCCH is performed by a terminal. The method includes the following steps.

At step S61, indication information is received. The indication information is configured to indicate the terminal to dynamically switch repetition transmission schemes, to cooperatively and repeatedly transmit the PUCCH towards the multiple TRP directions.

The repetition transmission schemes include an inter-slot repetition transmission scheme, an intra-slot repetition transmission scheme based on beam hopping, and an intra-slot repetition transmission scheme based on sub-slot.

At step S62, the PUCCH is cooperatively transmitted towards the multiple TRP directions based on the indication information.

In embodiments of the disclosure, when the terminal cooperatively transmits the PUCCH towards multiple TRP directions, different data transmission schemes may be dynamically switched via the indication information during the data transmission towards different TRP directions, so that the terminal may cooperatively transmit the PUCCH based on different transmission schemes towards different TRP directions.

In an implementation provided in embodiments of the disclosure, the network device may configure a sub-slot transmission configuration parameter to achieve switching between different repetition transmission schemes. That is, the network device may indicate, by transmitting the sub-slot transmission configuration parameter, sub-slot resource information occupied by cooperatively and repeatedly transmitting the PUCCH towards the multiple TRP directions.

FIG. 11 is a flowchart illustrating a communication method for a PUCCH according to some embodiments. The communication method for the PUCCH may be executed alone or in combination with other embodiments of the disclosure. As illustrated in FIG. 11, the communication method for the PUCCH is performed by a terminal. The method includes the following step.

At step S71, a sub-slot transmission configuration parameter is received. The sub-slot transmission configuration parameter is configured to indicate sub-slot resource information occupied by cooperatively and repeatedly transmitting the PUCCH towards the multiple TRP directions.

In embodiments of the disclosure, the terminal may achieve dynamic switching between different repetition transmission schemes based on the received sub-slot transmission configuration parameter. For example, the terminal achieves dynamic switching between scheme 1 and scheme 3 based on the sub-slot transmission configuration parameter. And dynamic switching between scheme 2 and scheme 3 may be achieved by changing dynamically a subslot configuration of scheme 3.

FIG. 12 is a flowchart illustrating a communication method for a PUCCH according to some embodiments. The communication method for the PUCCH may be executed alone or in combination with other embodiments of the disclosure. As illustrated in FIG. 12, the communication method for the PUCCH is performed by a terminal. The method includes the following step.

At step S81, an RRC signaling is received. The RRC signaling includes PUCCH configuration information, and the PUCCH configuration information configures sub-slot configuration length information at a PUCCH resource level or a PUCCH resource set level or a PUCCH format level.

In embodiments of the disclosure, the RRC signaling semi-statically configures the sub-slot transmission configuration parameter.

For example, a subslot transmission configuration is performed by adding a subslotLengthForPUCCH parameter of a PUCCH resource level or a PUCCH format level into an RRC parameter PUCCH config. For example, the subslotLengthForPUCCH parameter may configure a subslot, for example, a length of 2 or 7 symbols or other values.

It may be understood that, the subslotLengthForPUCCH parameter in the related protocol is not configured to indicate a size of sub-slot resources of a PUCCH repetition transmission. In embodiments of the disclosure, the subslotLengthForPUCCH parameter indicates a size of sub-slot resources of a PUCCH repetition transmission to achieve dynamic switching between different repetition transmission schemes.

In embodiments of the disclosure, a subslot transmission configuration corresponding to the PUCCH resource may be configured or modified via the MAC-CE, to achieve dynamic switching between different repetition transmission schemes.

In embodiments of the disclosure, the sub-slot transmission configuration parameter may be enabled or disabled, so that the resource may be directly and dynamically switched between configurations of a slot repetition transmission scheme and a sub-slot repetition transmission scheme, which is suitable for a subsequent scheduling requirement.

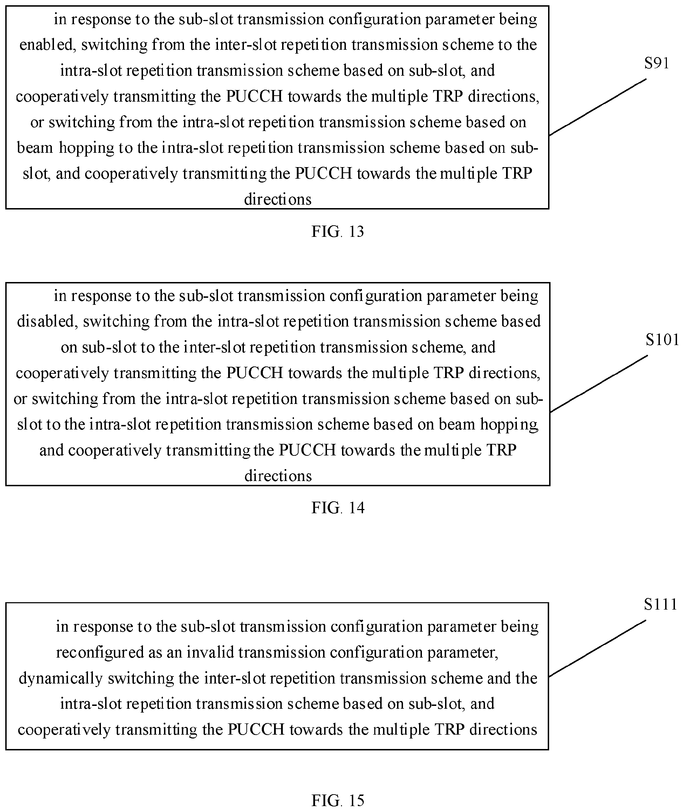

FIG. 13 is a flowchart illustrating a communication method for a PUCCH according to some embodiments. The communication method for the PUCCH may be executed alone or in combination with other embodiments of the disclosure. As illustrated in FIG. 13, the communication method for the PUCCH is performed by a terminal. The method includes the following step.

At step S91, in response to the sub-slot transmission configuration parameter being enabled, the inter-slot repetition transmission scheme is switched to the intra-slot repetition transmission scheme based on sub-slot, and the PUCCH is cooperatively transmitted towards the multiple TRP directions, or the intra-slot repetition transmission scheme based on beam hopping is switched to the intra-slot repetition transmission scheme based on sub-slot, and the PUCCH is cooperatively transmitted towards the multiple TRP directions.

FIG. 14 is a flowchart illustrating a communication method for a PUCCH according to some embodiments. The communication method for the PUCCH may be executed alone or in combination with other embodiments of the disclosure. As illustrated in FIG. 14, the communication method for the PUCCH is performed by a terminal. The method includes the following step.

At step S101, in response to the sub-slot transmission configuration parameter being disabled, the intra-slot repetition transmission scheme based on sub-slot is switched to the inter-slot repetition transmission scheme, and the PUCCH is cooperatively transmitted towards the multiple TRP directions, or the intra-slot repetition transmission scheme based on sub-slot is switched to the intra-slot repetition transmission scheme based on beam hopping, and the PUCCH is cooperatively transmitted towards the multiple TRP directions.

In embodiments of the disclosure, the sub-slot transmission configuration parameter is reconfigured as an invalid transmission configuration parameter to achieve dynamic switching of the repetition transmission schemes. For example, the sub-slot transmission configuration parameter is reconfigured as an invalid transmission configuration parameter, to achieve dynamic switching between the inter-slot repetition transmission scheme and the intra-slot repetition transmission scheme based on sub-slot.

FIG. 15 is a flowchart illustrating a communication method for a PUCCH according to some embodiments. The communication method for the PUCCH may be executed alone or in combination with other embodiments of the disclosure. As illustrated in FIG. 15, the communication method for the PUCCH is performed by a terminal. The method includes the following step.

At step S 111, in response to the sub-slot transmission configuration parameter being reconfigured as an invalid transmission configuration parameter, the inter-slot repetition transmission scheme and the intra-slot repetition transmission scheme based on sub-slot are dynamically switched, and the PUCCH is cooperatively transmitted towards the multiple TRP directions.

In the communication method for the PUCCH provided in embodiments of the disclosure, a slot number configuration parameter (an nrofslots parameter) may be configured to achieve dynamic switching between different repetition transmission scheme.

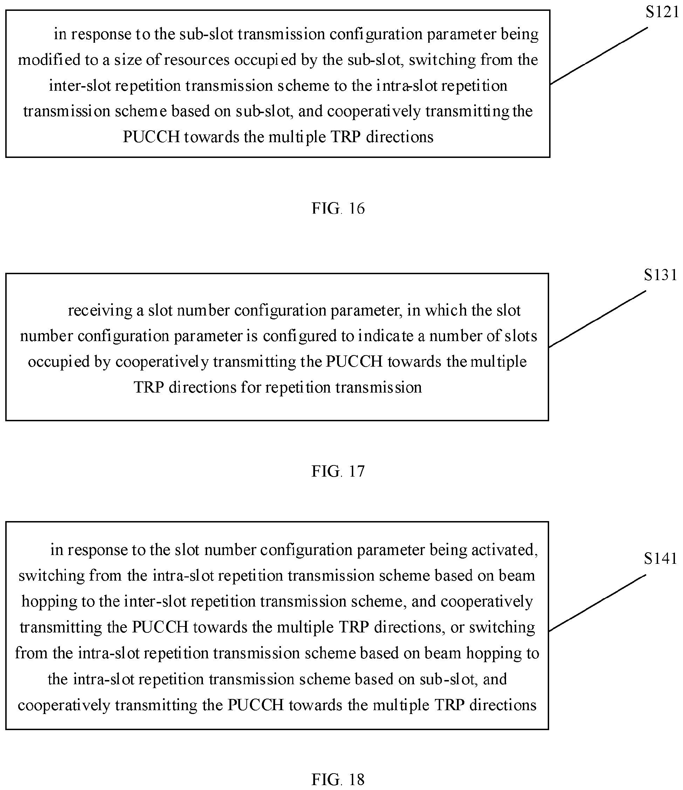

FIG. 16 is a flowchart illustrating a communication method for a PUCCH according to some embodiments. The communication method for the PUCCH may be executed alone or in combination with other embodiments of the disclosure. As illustrated in FIG. 16, the communication method for the PUCCH is performed by a terminal. The method includes the following step.

At step S121, in response to the sub-slot transmission configuration parameter being modified to a size of resources occupied by the sub-slot, the inter-slot repetition transmission scheme is switched to the intra-slot repetition transmission scheme based on sub-slot, and the PUCCH is cooperatively transmitted towards the multiple TRP directions.

In embodiments of the disclosure, the terminal may receive a slot number configuration parameter configured and transmitted by the network device, to achieve dynamic switching between scheme 1 and scheme 2, and dynamic switching between scheme 2 and scheme 3.

FIG. 17 is a flowchart illustrating a communication method for a PUCCH according to some embodiments. The communication method for the PUCCH may be executed alone or in combination with other embodiments of the disclosure. As illustrated in FIG. 17, the communication method for the PUCCH is performed by a terminal. The method includes the following step.

At step S131, a slot number configuration parameter is received. The slot number configuration parameter is configured to indicate a number of slots occupied by cooperatively transmitting the PUCCH towards the multiple TRP directions for repetition transmission.

In an implementation of embodiments of the disclosure, the slot number configuration parameter may be enabled or disabled, to achieve direct dynamic switching between configurations of a slot repetition transmission scheme and a beam hopping retransmission scheme, which is suitable for a subsequent scheduling requirement.

FIG. 18 is a flowchart illustrating a communication method for a PUCCH according to some embodiments. The communication method for the PUCCH may be executed alone or in combination with other embodiments of the disclosure. As illustrated in FIG. 18, the communication method for the PUCCH is performed by a terminal. The method includes the following step.

At step S141, in response to the slot number configuration parameter being activated, the intra-slot repetition transmission scheme based on beam hopping is switched to the inter-slot repetition transmission scheme, and the PUCCH is cooperatively transmitted towards the multiple TRP directions, or the intra-slot repetition transmission scheme based on beam hopping is switched to the intra-slot repetition transmission scheme based on sub-slot, and the PUCCH is cooperatively transmitted towards the multiple TRP directions.

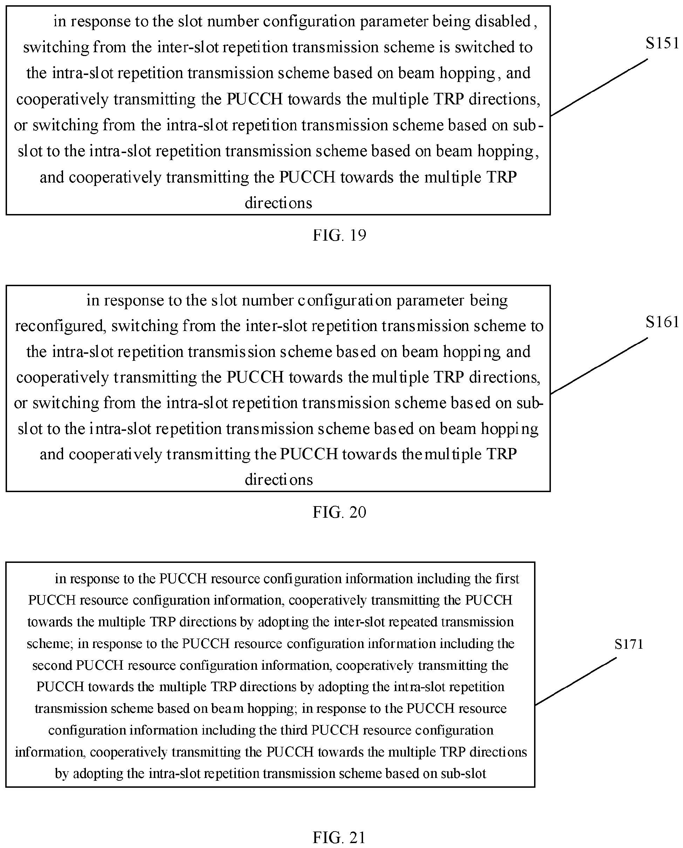

FIG. 19 is a flowchart illustrating a communication method for a PUCCH according to some embodiments. The communication method for the PUCCH may be executed alone or in combination with other embodiments of the disclosure. As illustrated in FIG. 19, the communication method for the PUCCH is performed by a terminal. The method includes the following step.

At step S151, in response to the slot number configuration parameter being disabled, the inter-slot repetition transmission scheme is switched to the intra-slot repetition transmission scheme based on beam hopping, and the PUCCH is cooperatively transmitted towards the multiple TRP directions, or the intra-slot repetition transmission scheme based on sub-slot is switched to the intra-slot repetition transmission scheme based on beam hopping, and the PUCCH is cooperatively transmitted towards the multiple TRP directions.

In another implementation of embodiments of the disclosure, the slot number configuration parameter is reconfigured to achieve switching from the inter-slot repetition transmission scheme to the intra-slot repetition transmission scheme based on beam hopping, or the intra-slot repetition transmission scheme based on sub-slot is switched to the intra-slot repetition transmission scheme based on beam hopping.

FIG. 20 is a flowchart illustrating a communication method for a PUCCH according to some embodiments. The communication method for the PUCCH may be executed alone or in combination with other embodiments of the disclosure. As illustrated in FIG. 20, the communication method for the PUCCH is performed by a terminal. The method includes the following step.

At step S161, in response to the slot number configuration parameter being reconfigured, the inter-slot repetition transmission scheme is switched to the intra-slot repetition transmission scheme based on beam hopping, and the PUCCH is cooperatively transmitted towards the multiple TRP directions, or the intra-slot repetition transmission scheme based on sub-slot is switched to the intra-slot repetition transmission scheme based on beam hopping, and the PUCCH is cooperatively transmitted towards the multiple TRP directions.

In an implementation, the indication information includes PUCCH resource configuration information. The PUCCH resource configuration information includes first PUCCH resource configuration information, or second PUCCH resource configuration information, or third PUCCH resource configuration information.

In the communication method for the PUCCH provided in embodiments of the disclosure, dynamic switching between different repetition transmission schemes may be achieved by PUCCH resource configuration information. For example, different PUCCH resource configuration information corresponding to scheme 1, scheme 2 and scheme 3 are respectively configured in the same PUCCH resource set. The PRI indicated via the DCI determines to enable a current scheduling transmission scheme. It may be understood that, the terminal may determine the current PUCCH transmission scheme via the RRC signaling.

FIG. 21 is a flowchart illustrating a communication method for a PUCCH according to some embodiments. The communication method for the PUCCH may be executed alone or in combination with other embodiments of the disclosure. As illustrated in FIG. 21, the communication method for the PUCCH is performed by a terminal. The method includes the following step.

At step S171, in response to the PUCCH resource configuration information including the first PUCCH resource configuration information, the PUCCH is cooperatively transmitted towards the multiple TRP directions by adopting the inter-slot repeated transmission scheme.

In response to the PUCCH resource configuration information including the second PUCCH resource configuration information, the PUCCH is cooperatively transmitted towards the multiple TRP directions by adopting the intra-slot repetition transmission scheme based on beam hopping.

In response to the PUCCH resource configuration information including the third PUCCH resource configuration information, the PUCCH is cooperatively transmitted towards the multiple TRP directions by adopting the intra-slot repetition transmission scheme based on sub-slot.

In embodiments of the disclosure, switching between different PUCCH information transmission schemes under the multi-TRP transmission is achieved by different manners, which may enhance the scheduling flexibility, adapt to channel and service changes more quickly and flexibly, reduce a latency, utilize system resources more effectively, and improve a system performance.

It may be understood that, the communication method for the PUCCH performed by the terminal provided in embodiments of the disclosure, is similar to the communication method for the PUCCH performed by the network device, which will not be repeated herein.

It may be further understood that, the communication method for the PUCCH provided in embodiments of the disclosure is applicable to an implementation process that an interaction between the terminal and the network device achieves the multi-TRP transmission. In the method for the multi-TRP transmission achieved by interaction between the terminal and the network device, the terminal and the network device respectively possess related functions involved in the above embodiments, which will not be repeated herein.

It needs to be noted that, those skilled in the art may understand that various implementations/embodiments involved in embodiments of the disclosure may be used in combination with the above embodiments, or may be independently used. Whether independently used or used in combination with the above embodiments, the implementation principle is similar. In embodiments of the disclosure, part of embodiments is illustrated by the implementations used together. It may be understood by those skilled in the art that the examples are not a limitation of embodiments of the disclosure.

Based on the same conception, a communication apparatus for a PUCCH is further provided in embodiments of the disclosure.

It may be understood that, the communication apparatus for the PUCCH provided in embodiments of the disclosure includes hardware structures and/or software modules that perform corresponding functions in order to achieve the above functions. In combination with modules and algorithm steps of examples described in embodiments of the disclosure, the embodiments of the disclosure may be implemented in the form of hardware or a combination of hardware and computer software. Whether a certain function is executed by hardware or computer software driving hardware depends on specific applications and design constraints of the technical solutions. Those skilled in the art may adopt different methods for each specific application to implement the described functions, but such implementation should not be considered as beyond the scope of the technical solutions in embodiments of the disclosure.

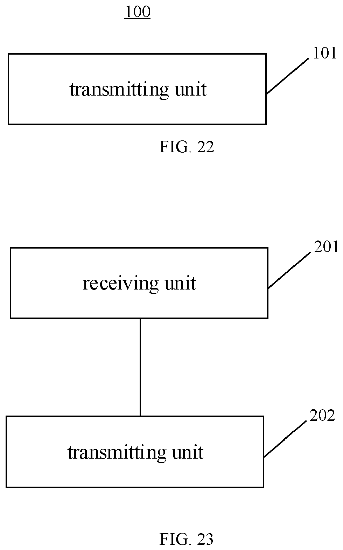

FIG. 22 is a block diagram illustrating a communication apparatus for a PUCCH according to some embodiments. As illustrated in FIG. 22, a communication apparatus 100 for a PUCCH is applied to a network device and includes a transmitting unit 101.

The transmitting unit 101 is configured to, in response to determining that a terminal cooperatively transmits the PUCCH towards multiple TRP directions, transmit indication information; in which the indication information is configured to indicate the terminal to dynamically switch repetition transmission schemes, to cooperatively and repeatedly transmit the PUCCH towards the multiple TRP directions; and the repetition transmission schemes include an inter-slot repetition transmission scheme, an intra-slot repetition transmission scheme based on beam hopping, and an intra-slot repetition transmission scheme based on sub-slot.

In an implementation, the transmitting unit 101 transmits a sub-slot transmission configuration parameter, in which the sub-slot transmission configuration parameter is configured to indicate sub-slot resource information occupied by cooperatively and repeatedly transmitting the PUCCH towards the multiple TRP directions.

In an implementation, the transmitting unit 101 configures an RRC signaling, in which the RRC signaling includes PUCCH configuration information, and the PUCCH configuration information configures sub-slot configuration length information at a PUCCH resource level or a PUCCH resource set level or a PUCCH format level.

In an implementation, the transmitting unit 101 is further configured to enable the sub-slot transmission configuration parameter, to achieve switching from the inter-slot repetition transmission scheme to the intra-slot repetition transmission scheme based on sub-slot, or switching from the intra-slot repetition transmission scheme based on beam hopping to the intra-slot repetition transmission scheme based on sub-slot; or disable the sub-slot transmission configuration parameter, to achieve switching from the intra-slot repetition transmission scheme based on sub-slot to the inter-slot repetition transmission scheme, or switching from the intra-slot repetition transmission scheme based on sub-slot to the intra-slot repetition transmission scheme based on beam hopping.

In an implementation, the transmitting unit 101 is further configured to reconfigure the sub-slot transmission configuration parameter as an invalid transmission configuration parameter, to achieve dynamic switching between the inter-slot repetition transmission scheme and the intra-slot repetition transmission scheme based on sub-slot.

In an implementation, the transmitting unit 101 is further configured to modify the sub-slot transmission configuration parameter to a size of resources occupied by the sub-slot, to achieve switching from the inter-slot repetition transmission scheme to the intra-slot repetition transmission scheme based on sub-slot.

In an implementation, the transmitting unit 101 transmits a slot number configuration parameter. The slot number configuration parameter is configured to indicate a number of slots occupied by cooperatively transmitting the PUCCH towards the multiple TRP directions for repetition transmission.

In an implementation, the transmitting unit 101 is further configured to: enable the slot number configuration parameter, to achieve switching from the intra-slot repetition transmission scheme based on beam hopping to the inter-slot repetition transmission scheme, or switching from the intra-slot repetition transmission scheme based on beam hopping to the intra-slot repetition transmission scheme based on sub-slot; or disable the slot number configuration parameter, to achieve switching from the inter-slot repetition transmission scheme to the intra-slot repetition transmission scheme based on beam hopping, or switching from the intra-slot repetition transmission scheme based on sub-slot to the intra-slot repetition transmission scheme based on beam hopping.

In an implementation, the transmitting unit 101 is further configured to reconfigure the slot number configuration parameter, to achieve switching from the inter-slot repetition transmission scheme to the intra-slot repetition transmission scheme based on beam hopping, or switching from the intra-slot repetition transmission scheme based on sub-slot to the intra-slot repetition transmission scheme based on beam hopping.

In an implementation, the transmitting unit 101 transmits PUCCH resource configuration information. The PUCCH resource configuration information includes first PUCCH resource configuration information, or second PUCCH resource configuration information, or third PUCCH resource configuration information. The first PUCCH resource configuration information corresponds to the inter-slot repetition transmission scheme, the second PUCCH resource configuration information corresponds to the intra-slot repetition transmission scheme based on beam hopping, and the third PUCCH resource configuration information corresponds to the intra-slot repetition transmission scheme based on sub-slot.

FIG. 23 is a block diagram illustrating a communication apparatus for a PUCCH according to some embodiments. As illustrated in FIG. 23, a communication apparatus 200 for a PUCCH is performed by a terminal, and includes a receiving unit 201 and a transmitting unit 202.

The receiving unit 201 is configured to receive indication information, in which the indication information is configured to indicate the terminal to dynamically switch repetition transmission schemes, to cooperatively and repeatedly transmit the PUCCH towards multiple TRP directions; and the repetition transmission schemes include an inter-slot repetition transmission scheme, an intra-slot repetition transmission scheme based on beam hopping, and an intra-slot repetition transmission scheme based on sub-slot.

The transmitting unit 202 is configured to cooperatively transmit the PUCCH towards the multiple TRP directions based on the indication information.

In an implementation, the receiving unit 201 receives a sub-slot transmission configuration parameter. The sub-slot transmission configuration parameter is configured to indicate sub-slot resource information occupied by cooperatively and repeatedly transmitting the PUCCH towards the multiple TRP directions.

In an implementation, the receiving unit 201 receives an RRC signaling. The RRC signaling includes PUCCH configuration information, and the PUCCH configuration information configures sub-slot configuration length information at a PUCCH resource level or a PUCCH resource set level or a PUCCH format level.

In an implementation, in response to the sub-slot transmission configuration parameter being enabled, the transmitting unit 202 switches from the inter-slot repetition transmission scheme to the intra-slot repetition transmission scheme based on sub-slot, and cooperatively transmits the PUCCH towards the multiple TRP directions, or switches from the intra-slot repetition transmission scheme based on beam hopping to the intra-slot repetition transmission scheme based on sub-slot, and cooperatively transmits the PUCCH towards the multiple TRP directions; or, in response to the sub-slot transmission configuration parameter being disabled, the transmitting unit 202 switches from the intra-slot repetition transmission scheme based on sub-slot to the inter-slot repetition transmission scheme, and cooperatively transmits the PUCCH towards the multiple TRP directions, or switches from the intra-slot repetition transmission scheme based on sub-slot to the intra-slot repetition transmission scheme based on beam hopping, and cooperatively transmits the PUCCH towards the multiple TRP directions.

In an implementation, in response to the sub-slot transmission configuration parameter being reconfigured as an invalid transmission configuration parameter, the transmitting unit 202 dynamically switches between the inter-slot repetition transmission scheme and the intra-slot repetition transmission scheme based on sub-slot, and cooperatively transmits the PUCCH towards the multiple TRP directions.

In an implementation, in response to the sub-slot transmission configuration parameter being modified to a size of resources occupied by the sub-slot, the transmitting unit 202 switches from the inter-slot repetition transmission scheme to the intra-slot repetition transmission scheme based on sub-slot, and cooperatively transmits the PUCCH towards the multiple TRP directions.

In an implementation, the receiving unit 201 receives a slot number configuration parameter. The slot number configuration parameter is configured to indicate a number of slots occupied by cooperatively transmitting the PUCCH towards the multiple TRP directions for repetition transmission.

In an implementation, in response to the slot number configuration parameter being enabled, the transmitting unit 202 switches from the intra-slot repetition transmission scheme based on beam hopping to the inter-slot repetition transmission scheme, and cooperatively transmits the PUCCH towards the multiple TRP directions, or switches from the intra-slot repetition transmission scheme based on beam hopping to the intra-slot repetition transmission scheme based on sub-slot, and cooperatively transmits the PUCCH towards the multiple TRP directions; or, in response to the slot number configuration parameter being disabled, the transmitting unit 202 switches from the inter-slot repetition transmission scheme to the intra-slot repetition transmission scheme based on beam hopping, and cooperatively transmits the PUCCH towards the multiple TRP directions, or switches from the intra-slot repetition transmission scheme based on sub-slot to the intra-slot repetition transmission scheme based on beam hopping, and cooperatively transmits the PUCCH towards the multiple TRP directions.

In an implementation, in response to the slot number configuration parameter being reconfigured, the transmitting unit 202 switches from the inter-slot repetition transmission scheme to the intra-slot repetition transmission scheme based on beam hopping, and cooperatively transmits the PUCCH towards the multiple TRP directions, or switches from the intra-slot repetition transmission scheme based on sub-slot to the intra-slot repetition transmission scheme based on beam hopping, and cooperatively transmits the PUCCH towards the multiple TRP directions.

In an implementation, the indication information includes PUCCH resource configuration information. The PUCCH resource configuration information includes first PUCCH resource configuration information, or second PUCCH resource configuration information, or third PUCCH resource configuration information; and in response to the PUCCH resource configuration information including the first PUCCH resource configuration information, the transmitting unit 202 cooperatively transmits the PUCCH towards the multiple TRP directions by adopting the inter-slot repeated transmission scheme; in response to the PUCCH resource configuration information including the second PUCCH resource configuration information, the transmitting unit 202 cooperatively transmits the PUCCH towards the multiple TRP directions by adopting the intra-slot repetition transmission scheme based on beam hopping; and in response to the PUCCH resource configuration information including the third PUCCH resource configuration information, the transmitting unit 202 cooperatively transmits the PUCCH towards the multiple TRP directions by adopting the intra-slot repetition transmission scheme based on sub-slot.

With respect to the apparatuses in the above embodiments, the specific manners for performing operations for individual modules therein have been described in detail in the embodiments regarding the methods, which will not be elaborated herein

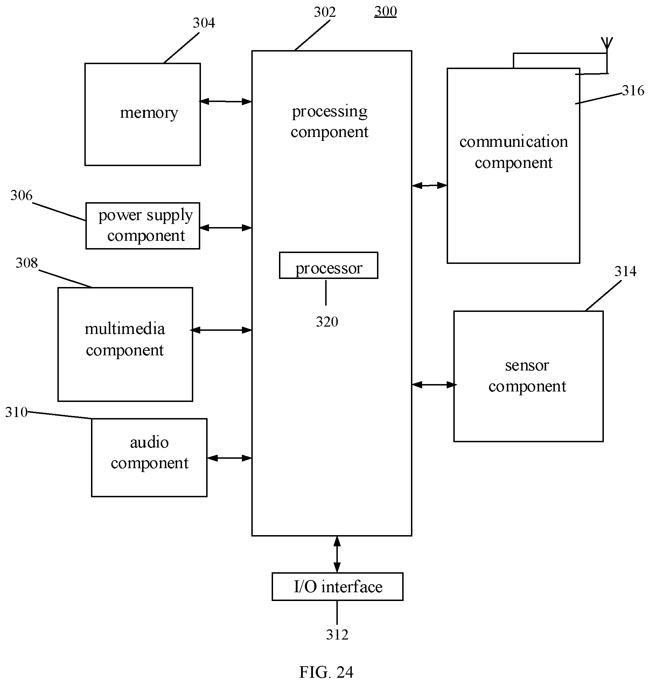

FIG. 24 is a block diagram illustrating a communication device for a PUCCH according to some embodiments. For example, a device 300 may be a mobile phone, a computer, a digital broadcasting terminal, a messaging device, a game console, a tablet device, a medical equipment, a fitness equipment, a personal digital assistant, etc.

As illustrated in FIG. 24, the device 300 may include one or more components: a processing component 302, a memory 304, a power supply component 306, a multimedia component 308, an audio component 310, an input/output (I/O) interface 312, a sensor component 314, and a communication component 316.

The processing component 302 generally controls the whole operation of the device 300, such as operations related to display, phone call, data communication, camera operation and recording operation. The processing component 302 may include one or more processors 320 to perform instructions, to complete all or part of steps of the above method. In addition, the processing component 302 may include one or more modules for the convenience of interaction between the processing component 302 and other components. For example, the processing component 302 may include a multimedia module for the convenience of interaction between the multimedia component 308 and the processing component 302.

The memory 304 is configured to store all types of data to support the operation of the device 300. Examples of the data include the instructions of any applications or methods operated on the device 300, contact data, phone book data, messages, pictures, videos, etc. The memory 304 may be implemented by any type of volatile or non-volatile storage devices or their combination, such as a static random access memory (SRAM), an electrically erasable programmable read-only memory (EEPROM), an erasable programmable read-only (EPROM), a programmable read-only memory (PROM), a read-only memory (ROM), a magnetic memory, a flash memory, a magnetic disk or an optical disk.

The power supply component 306 may provide power supply for all components of the device 300. The power supply component 306 may include a power supply management system, one or more power supplies, and other units related to generating, managing and distributing power for the device 300.

The multimedia component 308 includes an output interface screen provided between the device 300 and the user. In some embodiments, the screen may include a liquid crystal display (LCD) and a touch panel (TP). When the screen includes a touch panel, the screen may be implemented as a touch screen to receive input signals from the user. The touch panel includes one or more touch sensors to sense touch, slide and gestures on the touch panel. The touch sensor may not only sense the boundary of touch or slide action, but also detect the duration and pressure related to the touch or slide operation. In some embodiments, the multimedia component 308 includes a front camera and/or a rear camera. When the device 300 is in an operation mode, such as a shooting mode or a video mode, the front camera or the rear camera may receive external multimedia data. Each front camera and rear camera may be a fixed optical lens system or an optical lens system with a focal length and an optical zoom capacity.

The audio component 310 is configured as an output and/or input signal. For example, the audio component 310 includes a microphone (MIC). When the device 300 is in operation mode, such as call mode, record mode, and speech recognition mode, the microphone is configured to receive external audio signals. The audio signals received may be further stored in the memory 304 or sent via the communication component 316. In some embodiments, the audio component 310 further includes a speaker configured to output an audio signal.

The I/O interface 312 provides an interface for the processing component 302 and the peripheral interface module, and the peripheral interface module may be a keyboard, a click wheel, a button, etc. The buttons may include but not limited to a home button, a volume button, a start button and a lock button.

The sensor component 314 includes one or more sensors, configured to provide various aspects of status assessment for the device 300. For example, the sensor component 314 may detect the on/off state of the device 300 and relative positioning of the component. For example, the component is a display and a keypad of the device 300. The sensor component 314 may further detect the location change of the device 300 or one component of the device 300, the presence or absence of contact between the user and the device 300, the orientation or acceleration/deceleration of the device 300, and the temperature change of the device 300. The sensor component 314 may include a proximity sensor, which is configured to detect the existence of the objects nearby without any physical contact. The sensor component 314 may further include a light sensor such as a CMOS or CCD image sensor, which is configured to use in imaging applications. In some embodiments, the sensor component 314 may further include an acceleration transducer, a gyroscope sensor, a magnetic sensor, a pressure sensor or a temperature sensor.

The communication component 316 is configured for the convenience of wire or wireless communication between the device 300 and other devices. The device 300 may access wireless networks based on communication standard, such as Wi-Fi, 2G or 3G, or their combination. In an embodiment, the communication component 316 receives broadcast signals or broadcast-related information from an external broadcast management system via a broadcast channel. In some embodiments, the communication component 316 further includes a near field communication (NFC) module to facilitate short-range communication. For example, an NFC module may be implemented based on a radio frequency identification (RFID) technology, an infrared data association (IRDA) technology, an ultra-wideband (UWB) technology, a Bluetooth (BT) technology and other technologies.

In some embodiments, the device 300 may be implemented by one or more application specific integrated circuits(ASIC), digital signal processors (DSP), digital signal processing devices (DSPD), programmable logic devices (PLD), field programmable gate arrays (FPGA), controllers, microcontrollers, microprocessors or other electronics components, which is configured to perform the above method.

In some embodiments, a non-transitory computer-readable storage medium including instructions is further provided, such as the memory 304 including instructions. The instructions may be executed by the processor 320 of the device 300 to complete the above methods. For example, the non-transitory computer-readable storage medium may be a ROM, a random access memory (RAM), a CD-ROM, a magnetic tape, a floppy disk, an optical data storage device, etc.

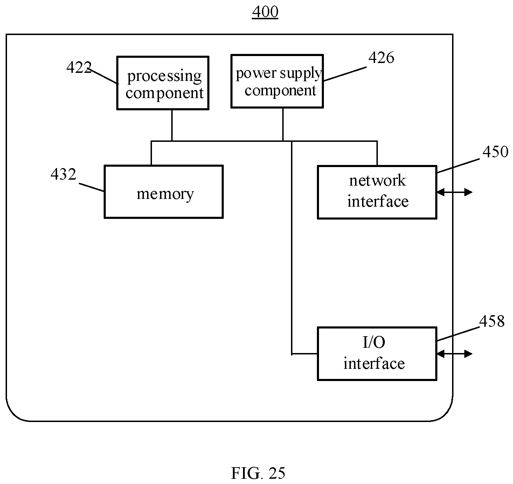

FIG. 25 is a block diagram illustrating a communication device 400 for a PUCCH according to some embodiments. For example, the device 400 may be provided as a server. As illustrated in FIG. 25, the device 400 includes a processing component 422, which further includes one or more processors, and memory resources represented by a memory 432, which are configured to store instructions executable by the processing component 422, for example, an application. The application stored in the memory 432 may include one or more modules each of which corresponds to a set of instructions. In addition, the processing component 422 is configured to execute instructions, to perform the above method.

The device 400 may further include one power supply component 426 configured to execute power management of the device 400, and one wired or wireless network interface 450 configured to connect the device 400 to a network, and one input/output(I/O) interface 458. The device 400 may operate an operating system stored in the memory 432, for example, Windows Server^{™}, Mac OS X^{™}, Unix^{™}, Linux^{™}, FreeBSD^{™}.

In some embodiments, the device 400 may be implemented by one or more application specific integrated circuits(ASIC), digital signal processors (DSP), digital signal processing devices (DSPD), programmable logic devices (PLD), field programmable gate arrays (FPGA), controllers, microcontrollers, microprocessors or other electronics components, which is configured to perform the above method.

In some embodiments, a non-transitory computer-readable storage medium including instructions is further provided, for example, the memory 432 including instructions. The instructions may be executed by the processing component 422 of the device 400 to complete the above methods. For example, the non-transitory computer-readable storage medium may be a ROM, a random access memory (RAM), a CD-ROM, a magnetic tape, a floppy disk, an optical data storage device, etc.

It may be further understood that, "a plurality of' in the disclosure means two or above, which is similar to other quantifiers. The term "and/or", describes the relationship of the association objects, indicating that there may exist three relationships, for example, A and/or B, may represent: any of existing A only, existing both A and B, or existing B only. The character "f' generally means the contextual object is a kind of "or" relationship. The singular forms "a", "the" and "said are also intended to include plural forms, unless the context clearly indicates otherwise.

It should be further understood that, although the terms "first", "second", "third", etc. may be configured to describe various information, such information shall not be limited to these terms. These terms are only used to distinguish the same type of information, rather than indicate a particular order or importance degree. In fact, "first", "second" and other similar descriptions may be used interchangeably. For example, subject to the scope of this disclosure, first information may also be referred to as second information, and similarly, and second information may also be referred to as first information.

It may be further understood that, even though operations are described in the drawings in a particular order, it should not be understood as requiring that such operations be performed in the particular order shown or in sequential order, or that all illustrated operations be performed to obtain desirable results. In certain circumstances, multitasking and parallel processing may be advantageous.

After considering the specification and practicing the disclosure here, those skilled in the art will easily think of other implementations. The present application is intended to cover any variations, usages, or adaptive changes of the disclosure. These variations, usages, or adaptive changes follow the general principles of the disclosure and include common knowledge or conventional technical means in the technical field not disclosed by the disclosure. The description and the embodiments are to be regarded as exemplary only, and the true scope and spirit of the disclosure are given by the appended claims.

It should be understood that the disclosure is not limited to the precise structure described above and shown in the drawings, and various modifications and changes may be made without departing from its scope. The scope of the present application is only limited by the appended claims. The scope of the present application is only limited by the appended claims.

## Claims

1. A communication method for a physical uplink control channel (PUCCH), performed by a network device, comprising:
in response to determining that a terminal cooperatively transmits the PUCCH towards multiple transmission reception point (TRP) directions, transmitting indication information;
wherein the indication information is configured to indicate the terminal to dynamically switch repetition transmission schemes, to cooperatively and repeatedly transmit the PUCCH towards the multiple TRP directions; and
the repetition transmission schemes comprise an inter-slot repetition transmission scheme, an intra-slot repetition transmission scheme based on beam hopping, and an intra-slot repetition transmission scheme based on sub-slot.

2. The communication method according to claim 1, wherein transmitting the indication information comprises:
transmitting a sub-slot transmission configuration parameter, wherein the sub-slot transmission configuration parameter is configured to indicate sub-slot resource information occupied by cooperatively and repeatedly transmitting the PUCCH towards the multiple TRP directions.

3. The communication method according to claim 2, wherein transmitting the sub-slot transmission configuration parameter comprises:
configuring a radio resource control (RRC) signaling, wherein the RRC signaling comprises PUCCH configuration information, and the PUCCH configuration information configures sub-slot configuration length information at a PUCCH resource level or a PUCCH resource set level or a PUCCH format level.

4. The communication method according to claim 2 or 3, further comprising:
enabling the sub-slot transmission configuration parameter, to achieve switching from the inter-slot repetition transmission scheme to the intra-slot repetition transmission scheme based on sub-slot, or switching from the intra-slot repetition transmission scheme based on beam hopping to the intra-slot repetition transmission scheme based on sub-slot; or
disabling the sub-slot transmission configuration parameter, to achieve switching from the intra-slot repetition transmission scheme based on sub-slot to the inter-slot repetition transmission scheme, or switching from the intra-slot repetition transmission scheme based on sub-slot to the intra-slot repetition transmission scheme based on beam hopping.

5. The communication method according to claim 2 or 3, further comprising:
reconfiguring the sub-slot transmission configuration parameter as an invalid transmission configuration parameter, to achieve dynamic switching between the inter-slot repetition transmission scheme and the intra-slot repetition transmission scheme based on sub-slot.

6. The communication method according to claim 2 or 3, further comprising:
modifying the sub-slot transmission configuration parameter to a size of resources occupied by the sub-slot, to achieve switching from the inter-slot repetition transmission scheme to the intra-slot repetition transmission scheme based on sub-slot.

7. The communication method according to claim 1, wherein transmitting the indication information comprises:
transmitting a slot number configuration parameter, wherein the slot number configuration parameter is configured to indicate a number of slots occupied by cooperatively transmitting the PUCCH towards the multiple TRP directions for repetition transmission.

8. The communication method according to claim 7, further comprising:
enabling the slot number configuration parameter, to achieve switching from the intra-slot repetition transmission scheme based on beam hopping to the inter-slot repetition transmission scheme, or switching from the intra-slot repetition transmission scheme based on beam hopping to the intra-slot repetition transmission scheme based on sub-slot; or
disabling the slot number configuration parameter, to achieve switching from the inter-slot repetition transmission scheme to the intra-slot repetition transmission scheme based on beam hopping, or switching from the intra-slot repetition transmission scheme based on sub-slot to the intra-slot repetition transmission scheme based on beam hopping.

9. The communication method according to claim 8, further comprising:
reconfiguring the slot number configuration parameter, to achieve switching from the inter-slot repetition transmission scheme to the intra-slot repetition transmission scheme based on beam hopping, or switching from the intra-slot repetition transmission scheme based on sub-slot to the intra-slot repetition transmission scheme based on beam hopping.

10. The communication method according to claim 1, wherein transmitting the indication information comprises:
transmitting PUCCH resource configuration information, wherein the PUCCH resource configuration information comprises first PUCCH resource configuration information, or second PUCCH resource configuration information, or third PUCCH resource configuration information; and
the first PUCCH resource configuration information corresponds to the inter-slot repetition transmission scheme, the second PUCCH resource configuration information corresponds to the intra-slot repetition transmission scheme based on beam hopping, and the third PUCCH resource configuration information corresponds to the intra-slot repetition transmission scheme based on sub-slot.

11. A communication method for a physical uplink control channel (PUCCH), performed by a terminal, comprising:
receiving indication information, wherein the indication information is configured to indicate the terminal to dynamically switch repetition transmission schemes, to cooperatively and repeatedly transmit the PUCCH towards multiple transmission reception point (TRP) directions; and the repetition transmission schemes comprise an inter-slot repetition transmission scheme, an intra-slot repetition transmission scheme based on beam hopping, and an intra-slot repetition transmission scheme based on sub-slot; and
cooperatively transmitting the PUCCH towards the multiple TRP directions based on the indication information.

12. The communication method according to claim 11, wherein receiving the indication information comprises:
receiving a sub-slot transmission configuration parameter, wherein the sub-slot transmission configuration parameter is configured to indicate sub-slot resource information occupied by cooperatively and repeatedly transmitting the PUCCH towards the multiple TRP directions.

13. The communication method according to claim 12, wherein receiving the sub-slot transmission configuration parameter comprises:
receiving a radio resource control (RRC) signaling, wherein the RRC signaling comprises PUCCH configuration information, and the PUCCH configuration information configures sub-slot configuration length information at a PUCCH resource level or a PUCCH resource set level or a PUCCH format level.

14. The communication method according to claim 12 or 13, wherein cooperatively transmitting the PUCCH towards the multiple TRP directions comprises:
in response to the sub-slot transmission configuration parameter being enabled, switching from the inter-slot repetition transmission scheme to the intra-slot repetition transmission scheme based on sub-slot, and cooperatively transmitting the PUCCH towards the multiple TRP directions, or switching from the intra-slot repetition transmission scheme based on beam hopping to the intra-slot repetition transmission scheme based on sub-slot, and cooperatively transmitting the PUCCH towards the multiple TRP directions; or,
in response to the sub-slot transmission configuration parameter being disabled, switching from the intra-slot repetition transmission scheme based on sub-slot to the inter-slot repetition transmission scheme, and cooperatively transmitting the PUCCH towards the multiple TRP directions, or switching from the intra-slot repetition transmission scheme based on sub-slot to the intra-slot repetition transmission scheme based on beam hopping, and cooperatively transmitting the PUCCH towards the multiple TRP directions.

15. The communication method according to claim 12 or 13, wherein cooperatively transmitting the PUCCH towards the multiple TRP directions comprises:
in response to the sub-slot transmission configuration parameter being reconfigured as an invalid transmission configuration parameter, dynamically switching between the inter-slot repetition transmission scheme and the intra-slot repetition transmission scheme based on sub-slot, and cooperatively transmitting the PUCCH towards the multiple TRP directions.

16. The communication method according to claim 12 or 13, wherein cooperatively transmitting the PUCCH towards the multiple TRP directions comprises:
in response to the sub-slot transmission configuration parameter being modified to a size of resources occupied by the sub-slot, switching from the inter-slot repetition transmission scheme to the intra-slot repetition transmission scheme based on sub-slot, and cooperatively transmitting the PUCCH towards the multiple TRP directions.

17. The communication method according to claim 11, wherein receiving the indication information comprises:
receiving a slot number configuration parameter, wherein the slot number configuration parameter is configured to indicate a number of slots occupied by cooperatively transmitting the PUCCH towards the multiple TRP directions for repetition transmission.

18. The communication method according to claim 17, wherein cooperatively transmitting the PUCCH towards the multiple TRP directions comprises:
in response to the slot number configuration parameter being enabled, switching from the intra-slot repetition transmission scheme based on beam hopping to the inter-slot repetition transmission scheme, and cooperatively transmitting the PUCCH towards the multiple TRP directions, or switching from the intra-slot repetition transmission scheme based on beam hopping to the intra-slot repetition transmission scheme based on sub-slot, and cooperatively transmitting the PUCCH towards the multiple TRP directions; or,
in response to the slot number configuration parameter being disabled, switching from the inter-slot repetition transmission scheme to the intra-slot repetition transmission scheme based on beam hopping, and cooperatively transmitting the PUCCH towards the multiple TRP directions, or switching from the intra-slot repetition transmission scheme based on sub-slot to the intra-slot repetition transmission scheme based on beam hopping, and cooperatively transmitting the PUCCH towards the multiple TRP directions.

19. The communication method according to claim 18, wherein cooperatively transmitting the PUCCH towards the multiple TRP directions comprises:
in response to the slot number configuration parameter being reconfigured, switching from the inter-slot repetition transmission scheme to the intra-slot repetition transmission scheme based on beam hopping, and cooperatively transmitting the PUCCH towards the multiple TRP directions, or switching from the intra-slot repetition transmission scheme based on sub-slot to the intra-slot repetition transmission scheme based on beam hopping, and cooperatively transmitting the PUCCH towards the multiple TRP directions.

20. The communication method according to claim 11, wherein the indication information comprises PUCCH resource configuration information, wherein the PUCCH resource configuration information comprises first PUCCH resource configuration information, or second PUCCH resource configuration information, or third PUCCH resource configuration information; and
transmitting the PUCCH towards the multiple TRP directions based on the indication information comprises:
in response to the PUCCH resource configuration information comprising the first PUCCH resource configuration information, cooperatively transmitting the PUCCH towards the multiple TRP directions by adopting the inter-slot repeated transmission scheme;
in response to the PUCCH resource configuration information comprising the second PUCCH resource configuration information, cooperatively transmitting the PUCCH towards the multiple TRP directions by adopting the intra-slot repetition transmission scheme based on beam hopping; and
in response to the PUCCH resource configuration information comprising the third PUCCH resource configuration information, cooperatively transmitting the PUCCH towards the multiple TRP directions by adopting the intra-slot repetition transmission scheme based on sub-slot.

21. A communication apparatus for a physical uplink control channel (PUCCH), applicable to a network device, comprising:
a transmitting unit, configured to, in response to determining that a terminal cooperatively transmits the PUCCH towards multiple transmission reception point (TRP) directions, transmit indication information;
wherein the indication information is configured to indicate the terminal to dynamically switch repetition transmission schemes, to cooperatively and repeatedly transmit the PUCCH towards the multiple TRP directions; and
the repetition transmission schemes comprise an inter-slot repetition transmission scheme, an intra-slot repetition transmission scheme based on beam hopping, and an intra-slot repetition transmission scheme based on sub-slot.

22. A communication apparatus for a physical uplink control channel (PUCCH), applicable to a terminal, comprising:
a receiving unit, configured to receive indication information, wherein the indication information is configured to indicate the terminal to dynamically switch repetition transmission schemes, to cooperatively and repeatedly transmit the PUCCH towards multiple transmission reception point (TRP) directions; and the repetition transmission schemes comprise an inter-slot repetition transmission scheme, an intra-slot repetition transmission scheme based on beam hopping, and an intra-slot repetition transmission scheme based on sub-slot; and
a transmitting unit, configured to cooperatively transmit the PUCCH towards the multiple TRP directions based on the indication information.

23. A communication device for a physical uplink control channel (PUCCH), comprising:
a processor; and
a memory for storing instructions executable by the processor;
wherein the processor is configured to perform the method according to any one of claims 1 to 10.

24. A communication device for a physical uplink control channel (PUCCH), comprising:
a processor; and
a memory for storing instructions executable by the processor;
wherein the processor is configured to perform the method according to any one of claims 11 to 20.

25. A storage medium storing instructions, wherein when the instructions in the storage medium are executed by a processor of a network device, the network device is caused to perform the method according to any one of claims 1 to 10.

26. A storage medium storing instructions, wherein when the instructions in the storage medium are executed by a processor of a terminal, the terminal is caused to perform the method according to any one of claims 11 to 20.
